# EUROPEAN PATENT APPLICATION

(11) **EP 4 324 807 A1**
(43) Date of publication of application: **21.02.2024**
(21) Application number: 22788224.8
(22) Date of filing: 15.04.2022
(51) Int. Cl.: C04B 35/486, A61C 5/77, A61C 13/083, C01G 25/02, C04B 35/63, C04B 35/632

(54) **ZIRCONIA GREEN BODY, ZIRCONIA CALCINED BODY, ZIRCONIA SINTERED BODY, AND METHODS RESPECTIVELY FOR PRODUCING THESE PRODUCTS**

(30) Priority: 16.04.2021 JP 2021070025
(71) Applicant: Kuraray Noritake Dental Inc., Kurashiki-shi, Okayama 710-0801 (JP)
(72) Inventor: KUDO, Yasutaka, Kurashiki-shi, Okayama 713-8550 (JP); NAKANO, Kirihiro, Miyoshi-shi, Aichi 470-0293 (JP)
(74) Representative: D Young & Co LLP
(86) International application number: PCT/JP2022/017964
(87) International publication number: WO 2022/220301

(57) **Abstract**

The present invention provides a zirconia sintered body that excels in both mechanical strength and translucency, and a zirconia molded body and zirconia pre-sintered body capable of providing such a zirconia sintered body, and containing a binder in an amount that assumes a thickness of 10 mm or more. The invention also provides methods of production of these. The present invention relates to a zirconia molded body comprising: a zirconia particle containing 2.0 to 9.0 mol% of yttria relative to the total number of moles of zirconium oxide and yttria, and having an average primary particle diameter of 60 nm or less; a polyol; and a binder, the polyol and the binder satisfying the relational formula X1 < Y1 < X2 < Y2 ^{<}_ 500°C. (The descriptions of the symbols in the formula are omitted.)

## Description

### TECHNICAL FIELD

The present invention relates to zirconia molded bodies, among others. Specifically, the present invention relates to a zirconia sintered body that excels in both mechanical strength and translucency, and a zirconia molded body and zirconia pre-sintered body capable of providing such a zirconia sintered body, and containing a binder and having a thickness of 10 mm or more, and to methods of production of these.

### BACKGROUND ART

In recent years, zirconia sintered bodies containing yttria have been used in dental material applications such as dental prostheses. In many cases, such dental prostheses are produced from a zirconia molded body of a desired shape, such as a disc or a prism, prepared by, for example, press forming zirconia particles or molding a slurry or composition containing zirconia particles. The zirconia molded body is then pre-sintered to provide a pre-sintered body (mill blank), which is then sintered after being cut (milled) into a shape of the desired dental prosthesis.

It has been confirmed that linear light transmittance can improve by making the crystal grain size of a zirconia sintered body smaller and more uniform (see, for example, Patent Literature 1). However, achieving a small and uniform crystal grain size in zirconia sintered bodies requires hot isostatic pressing (HIP). The HIP device used for a HIP process is a special type of device that falls in the category of high-pressure gas generator, and cannot be necessarily regarded as a convenient way of obtaining a zirconia sintered body of high linear light transmittance.

In this connection, there have been proposed a zirconia sintered body that excels in both mechanical strength and translucency, and a zirconia molded body and zirconia pre-sintered body for obtaining such zirconia sintered bodies, without using a HIP device (Patent Literature 2).

### CITATION LIST

### Patent Literature

Patent Literature 1: JP 2008-214168 A
Patent Literature 2: WO2020/179876

### SUMMARY OF INVENTION

### Technical Problem

In order to obtain a desired zirconia molded body, particularly a zirconia molded body with a thickness of 10 mm or more, a binder must be added to retain shape. The ability to retain shape improves by increasing the amount of binder. However, studies conducted by the present inventors revealed that adding an increased amount of binder results in a significant decrease in translucency due to the increased amount of binder.

Consequently, it has not been possible to obtain a zirconia sintered body that excels in both mechanical strength and translucency when a zirconia molded body is used that contains a binder in an amount that assumes a thickness of 10 mm or more.

It is an object of the present invention to provide a zirconia sintered body that excels in both mechanical strength and translucency, and a zirconia molded body and zirconia pre-sintered body capable of providing such a zirconia sintered body, and containing a binder in an amount that assumes a thickness of 10 mm or more, and to provide methods of production of these. Another object of the present invention is to provide methods by which a zirconia sintered body that excels in both mechanical strength and translucency, and a zirconia molded body and zirconia pre-sintered body capable of providing such a zirconia sintered body can be produced in a convenient fashion without using a HIP device.

### Solution to Problem

The present inventors conducted intensive studies to achieve the foregoing objects. In the studies, the present inventors focused on the combustion start temperatures and combustion end temperatures of the polyol and binder in a zirconia molded body that, in addition to the polyol and the binder, contains zirconia particles containing 2.0 to 9.0 mol% of yttria relative to the total number of moles of zirconium oxide and yttria, and having an average primary particle diameter of 60 nm or less, and found that the foregoing issues can be resolved when the combustion start temperatures and combustion end temperatures of the polyol and binder satisfy a specific relationship. The studies also revealed that such a zirconia sintered body is particularly suited for applications such as dental prostheses and other dental materials, and is highly useful not only as a dental prosthesis used for the cervical region of a tooth but also as a dental prosthesis for the occlusal surface of a posterior tooth, or the incisal region of a front tooth. The present inventors completed the present invention after further studies based on these findings.

Specifically, the present invention includes the following.
[1] A zirconia molded body comprising:
   a zirconia particle containing 2.0 to 9.0 mol% of yttria relative to the total number of moles of zirconium oxide and yttria, and having an average primary particle diameter of 60 nm or less;
   a polyol; and
   a binder,
   the polyol and the binder satisfying the relational formula X1 < Y1 < X2 < Y2 ≤ 500°C, where X1 represents a combustion start temperature of the polyol, X2 represents a combustion end temperature of the polyol, Y1 represents a combustion start temperature of the binder, and Y2 represents a combustion end temperature of the binder, in which X1 and Y1 represent temperatures at which a 0.5% weight reduction is observed, and X2 and Y2 represent temperatures at which a 99.5% weight reduction is observed relative to the pre-heating weight of 100% measured by thermogravimetry.
[2] The zirconia molded body according to [1], which has a thickness of 10 mm or more.
[3] The zirconia molded body according to [1] or [2], wherein the polyol has a combustion start temperature (X1) of 50°C or higher.
[4] The zirconia molded body according to any one of [1] to [3], which has a ΔL*(W-B) of 5 or more at a thickness of 1.5 mm.
[5] The zirconia molded body according to any one of [1] to [4], which has a crystal grain size of 180 nm or less after being sintered at 900 to 1,200°C under ordinary pressure.
[6] The zirconia molded body according to any one of [1] to [5], which has a three-point flexural strength of 500 MPa or more after being sintered at 900 to 1,200°C under ordinary pressure.
[7] The zirconia molded body according to any one of [1] to [6], which has a transmittance of 40% or more for light of 700 nm wavelength at a thickness of 0.5 mm after being sintered at 900 to 1,200°C under ordinary pressure.
[8] The zirconia molded body according to any one of [1] to [7], which has a linear light transmittance of 1% or more at a thickness of 1.0 mm after being sintered at 900 to 1,200°C under ordinary pressure.
[9] The zirconia molded body according to any one of [1] to [8], which has ten or fewer pores with a diameter of 50 nm or more per 28.5 µm² cross sectional area after being sintered at 900 to 1,200°C under ordinary pressure.
[10] The zirconia molded body according to any one of [1] to [9], which has a ΔL*(W-B) of 5 or more at a thickness of 1.5 mm after being pre-sintered at 200 to 800°C.
[11] A zirconia pre-sintered body comprising 2.0 to 9.0 mol% of yttria relative to the total number of moles of zirconium oxide and yttria,
   the zirconia pre-sintered body having a ΔL*(W-B) of 5 or more at a thickness of 1.5 mm, and having ten or fewer pores with a diameter of 50 nm or more per 28.5 µm² cross sectional area, and a thickness of 10 mm or more after being sintered at 900 to 1,200°C.
[12] A method for producing a zirconia pre-sintered body, comprising the step of pre-sintering a zirconia molded body of any one of [1] to [10] at 200 to 800°C.
[13] A zirconia sintered body comprising 2.0 to 9.0 mol% of yttria relative to the total number of moles of zirconium oxide and yttria,
   the zirconia sintered body having ten or fewer pores with a diameter of 50 nm or more per 28.5 µm² cross sectional area, and a thickness of 10 mm or more.
[14] A method for producing a zirconia sintered body, comprising the step of sintering a zirconia molded body of any one of [1] to [10], or a zirconia pre-sintered body of [11] at 900 to 1,200°C under ordinary pressure.

### Advantageous Effects of Invention

According to the present invention, a zirconia sintered body can be provided that excels in both mechanical strength and translucency. The present invention can also provide a zirconia molded body and zirconia pre-sintered body capable of providing such a zirconia sintered body, and containing a binder in an amount that assumes a thickness of 10 mm or more, and methods of production of these. The invention can also provide methods by which a zirconia sintered body that excels in both mechanical strength and translucency, and a zirconia molded body and zirconia pre-sintered body capable of providing such a zirconia sintered body can be produced in a convenient fashion without using a HIP device.

### DESCRIPTION OF EMBODIMENTS

In the present invention, "zirconia molded body" means a formed body obtained by a method such as press forming, injection molding, or stereolithography using various forms of zirconia, such as a powder, a granule, a paste, or a slurry, as the primary raw material, and that has not been brought to a pre-sintered or sintered state. That is, "zirconia molded body" distinguishes itself from zirconia pre-sintered bodies and zirconia sintered bodies in that it is a formed body that has not been fired.

In the present invention, "zirconia pre-sintered body" is a precursor (intermediate product) of a zirconia sintered body, and it means a body of zirconia particles (powder) that has not been fully sintered (a pre-sintered state).

In the present invention, "zirconia sintered body" means a body of zirconia particles (powder) that has been sintered.

In the present specification, the upper limits and lower limits of numeric ranges (for example, ranges of contents of components, and ranges of X1, Y1, X2, and Y2 and values calculated from these, as well as temperature ranges and numeric ranges of physical properties) can be combined appropriately.

The zirconia particles, zirconia molded body, zirconia pre-sintered body, and zirconia sintered body of the present invention comprise zirconium oxide, and a stabilizing agent capable of preventing a phase transformation of zirconium oxide. The stabilizing agent is preferably one capable of forming partially-stabilized zirconia. Examples of the stabilizing agent include oxides such as calcium oxide (CaO), magnesium oxide (MgO), yttrium oxide (Y₂O₃), cerium oxide (CeO₂), scandium oxide (Sc₂O₃), niobium oxide (Nb₂O₅), lanthanum oxide (La₂O₃), erbium oxide (Er₂O₅), praseodymium oxide (Pr₂O₃, PreOn), samarium oxide (Sm₂O₃), europium oxide (Eu₂O₃), and thulium oxide (Tm₂O₃). Preferred is yttria. The content of the stabilizing agent in a zirconia pre-sintered body of the present invention and in a sintered body thereof can be measured by, for example, a method such as inductively coupled plasma (ICP) emission spectral analysis or X-ray fluorescence analysis. In a zirconia pre-sintered body of the present invention and a sintered body thereof, the content of the stabilizing agent is preferably 0.1 to 18 mol%, more preferably 1 to 15 mol%, even more preferably 1.5 to 10 mol% relative to the total mole of zirconia and stabilizing agent, except where otherwise noted, as in the case of yttria.

The following describes preferred embodiments of the present invention, taking yttria (Y₂O₃) as an example of the stabilizing agent. The substitution of yttria with other stabilizing agents is inclusive of the present invention.

A zirconia molded body of the present invention comprises:
a zirconia particle containing 2.0 to 9.0 mol% of yttria relative to the total number of moles of zirconium oxide and yttria, and having an average primary particle diameter of 60 nm or less;
a polyol; and
a binder,
the polyol and the binder satisfying the relational formula X1 < Y1 < X2 < Y2 ≤ 500°C, where X1 represents a combustion start temperature of the polyol, X2 represents a combustion end temperature of the polyol, Y1 represents a combustion start temperature of the binder, and Y2 represents a combustion end temperature of the binder, in which X1 and Y1 represent temperatures at which a 0.5% weight reduction is observed, and X2 and Y2 represent temperatures at which a 99.5% weight reduction is observed relative to the pre-heating weight of 100% measured by thermogravimetry.

By using such a zirconia molded body, a zirconia sintered body that excels in both mechanical strength and translucency can be obtained, despite that the zirconia molded body contains a binder (and even with a thickness of 10 mm or more).

A certain preferred embodiment of the present invention is, for example, a zirconia pre-sintered body that comprises 2.0 to 9.0 mol% of yttria relative to the total number of moles of zirconium oxide and yttria, and has a ΔL*(W-B) of 5 or more at a thickness of 1.5 mm, and that has ten or fewer pores with a diameter of 50 nm or more, and a thickness of 10 mm or more after being sintered at 900 to 1,200°C. A zirconia sintered body that excels in both mechanical strength and translucency can also be obtained by using such a zirconia pre-sintered body.

In the present invention, "zirconia" means zirconium oxide, including yttrium oxide. In the present invention, the yttria content in the zirconia particles, zirconia molded body, zirconia pre-sintered body, and zirconia sintered body means the fraction (mol%) of the number of moles of yttrium oxide with respect to the total number of moles of zirconium oxide and yttrium oxide. The yttria content in a zirconia molded body of the present invention, and in a pre-sintered body and a sintered body thereof can be measured by using a method, for example, such as inductively coupled plasma (ICP) emission spectral analysis or X-ray fluorescence analysis.

### [Zirconia Sintered Body]

A zirconia sintered body is described first as an embodiment of the present invention. A zirconia sintered body of the present invention comprises 2.0 to 9.0 mol% of yttria relative to the total number of moles of zirconium oxide and yttria, and has ten or fewer pores with a diameter of 50 nm or more per 28.5 µm² cross sectional area, and a thickness of 10 mm or more. The zirconia sintered body has a thickness of preferably 12 mm or more, more preferably 15 mm or more. The shape of the zirconia sintered body with a thickness of 10 mm or more is not particularly limited, and may be a block shape (cuboidal), for example. The descriptions below are not intended to limit the present invention.

A zirconia sintered body of the present invention may comprise a fluorescent agent. The zirconia sintered body has fluorescence by comprising a fluorescent agent. The type of fluorescent agent is not particularly limited, and a fluorescent agent with the ability to emit fluorescence in response to light of a given wavelength can be used alone, or two or more of such fluorescent agents may be used. Examples of such fluorescent agents include those containing metallic elements. Examples of the metallic elements include Ga, Bi, Ce, Nd, Sm, Eu, Gd, Tb, Dy, and Tm. The fluorescent agent may contain one of such metallic elements alone, or may contain two or more of such metallic elements. For considerations such as enhancement of the effectiveness of the present invention, preferred among these metallic elements are Ga, Bi, Eu, Gd, and Tm, more preferably Bi and Eu. Examples of the fluorescent agent used when producing a zirconia sintered body of the present invention include oxides, hydroxides, acetates, and nitrates of the metallic elements above. The fluorescent agent may be, for example, Y₂SiO₅:Ce, Y₂SiO₅:Tb, (Y,Gd,Eu)BO₃, Y₂O₃:Eu, YAG:Ce, ZnGa₂O₄:Zn, or BaMgAl₁₀O₁₇:Eu.

The content of the fluorescent agent in the zirconia sintered body is not particularly limited, and can be appropriately adjusted according to factors such as the type of fluorescent agent, or intended use of the zirconia sintered body. In view of considerations such as suitability for use as a dental prosthesis, the content of fluorescent agent is preferably 0.001 mass% or more, more preferably 0.005 mass% or more, even more preferably 0.01 mass% or more, and is preferably 1 mass% or less, more preferably 0.5 mass% or less, even more preferably 0.1 mass% or less in terms of an oxide of a metallic element contained in the fluorescent agent, with respect to 100 mass% of zirconia contained in the zirconia sintered body. With the foregoing lower limits of fluorescent agent content, the fluorescence can be comparable to that of human natural teeth. With the foregoing upper limits of fluorescent agent content, it is possible to reduce a decrease in translucency and mechanical strength.

A zirconia sintered body of the present invention may comprise a colorant. By comprising a colorant, the zirconia sintered body becomes a colored zirconia sintered body. The type of colorant is not particularly limited, and the colorant may be a known pigment commonly used to color ceramics, or a known dental liquid colorant. For example, the colorant may be one containing a metallic element. Specific examples include oxides containing metallic elements such as iron, vanadium, praseodymium, erbium, chromium, nickel, and manganese, and composite oxides or salts thereof. It is also possible to use commercially available colorants. Examples of commercially available colorant products include the Prettau Colour Liquid manufactured by Zirkonzahn. The zirconia sintered body may comprise one colorant, or two or more colorants.

The colorant content in the zirconia sintered body is not particularly limited, and may be appropriately adjusted according to factors such as the type of colorant, and intended use of the zirconia sintered body. In view of considerations such as suitability for use as a dental prosthesis, the colorant content is preferably 0.001 mass% or more, more preferably 0.005 mass% or more, even more preferably 0.01 mass% or more, and is preferably 5 mass% or less, more preferably 1 mass% or less, even more preferably 0.5 mass% or less in terms of an oxide of a metallic element contained in the colorant, with respect to 100 mass% of zirconia contained in the zirconia sintered body. The colorant content may be 0.1 mass% or less, or 0.05 mass% or less.

With the present invention, a zirconia sintered body having excellent linear light transmittance can be obtained. A zirconia sintered body of the present invention may comprise a translucency adjuster, in order to adjust the translucency in the zirconia sintered body. Specific examples of the translucency adjuster include aluminum oxide, titanium oxide, silicon dioxide, zircon, lithium silicate, and lithium disilicate. The zirconia sintered body may comprise one translucency adjuster, or two or more translucency adjusters.

The content of the translucency adjuster in the zirconia sintered body is not particularly limited, and may be appropriately adjusted according to factors such as the type of translucency adjuster, and intended use of the zirconia sintered body. In view of considerations such as suitability for use as a dental prosthesis, the content of translucency adjuster is preferably 0.1 mass% or less with respect to 100 mass% of zirconia contained in the zirconia sintered body.

A zirconia sintered body of the present invention comprises 2.0 to 9.0 mol% of yttria relative to the total number of moles of zirconium oxide and yttria. Sufficient translucency cannot be obtained when the yttria content in the zirconia sintered body is less than 2.0 mol%. The mechanical strength decreases when the yttria content in the zirconia sintered body is higher than 9.0 mol% For considerations such as obtaining a zirconia sintered body with more superior translucency and mechanical strength, the yttria content in the zirconia sintered body is preferably 3.0 mol% or more, more preferably 3.5 mol% or more, even more preferably 4.0 mol% or more, and is preferably 8.0 mol% or less, more preferably 7.5 mol% or less, even more preferably 7.0 mol% or less.

A zirconia sintered body of the present invention has a crystal grain size of preferably 180 nm or less. It may not be possible to obtain sufficient translucency with a crystal grain size of more than 180 nm. For considerations such as obtaining a zirconia sintered body with more superior translucency, the crystal grain size is preferably 140 nm or less, more preferably 120 nm or less, even more preferably 110 nm or less. The crystal grain size may be 100 nm or less. The lower limit of crystal grain size is not particularly limited, and the crystal grain size may be, for example, 50 nm or more, or 70 nm or more. The crystal grain size of the zirconia sintered body can be determined by taking a cross section image of zirconia sintered body with a field-emission scanning electron microscope (FE-SEM), and finding the mean value of the diameters of corresponding circles of arbitrarily selected 100 particles (the diameters of true circles having the same areas) observed in the captured image.

A zirconia sintered body of the present invention excels in mechanical strength. A zirconia sintered body of the present invention has a three-point flexural strength of preferably 500 MPa or more, more preferably 600 MPa or more, even more preferably 650 MPa or more, particularly preferably 700 MPa or more, most preferably 800 MPa or more. With a zirconia sintered body of the present invention having such a three-point flexural strength, it is possible to reduce defects such as fracture in the oral cavity when the zirconia sintered body is used as, for example, a dental prosthesis. The upper limit of three-point flexural strength is not particularly limited, and the three-point flexural strength may be, for example, 1,500 MPa or less, or 1,000 MPa or less. The three-point flexural strength of the zirconia sintered body can be measured in compliance with ISO 6872:2015.

A zirconia sintered body of the present invention excels in translucency. A zirconia sintered body of the present invention has a transmittance of preferably 40% or more, more preferably 45% or more, even more preferably 46% or more for light of 700 nm wavelength at a thickness of 0.5 mm. The transmittance may be 46% or more, 48% or more, 50% or more, or 52% or more. With these transmittance ranges, it is easier to satisfy the translucency required for the incisal region when the zirconia sintered body is used as, for example, a dental prosthesis. The upper limit of transmittance is not particularly limited, and the transmittance may be, for example, 60% or less, or 57% or less. The transmittance of the zirconia sintered body for light of 700 nm wavelength at a thickness of 0.5 mm can be measured with a spectrophotometer. For example, a spectrophotometer (Hitachi spectrophotometer, Model U-3900H, manufactured by Hitachi High-Technologies Corporation) can be used to measure transmittance with the use of an integrating sphere by allowing generated light from a light source to pass through and scatter from the sample. In such a measurement, the transmittance for light of 700 nm wavelength may be determined after measuring transmittance in the wavelength region of 300 to 750 nm. The sample used for measurement may be a disc-shaped zirconia sintered body measuring 15 mm in diameter and 0.5 mm in thickness after it is polished to mirror finish on both sides.

A zirconia sintered body of the present invention excels in linear light transmittance. A zirconia sintered body of the present invention has a linear light transmittance of preferably 1% or more, more preferably 3% or more, even more preferably 5% or more, particularly preferably 7% or more at a thickness of 1.0 mm. The linear light transmittance may be 10% or more. With these ranges of linear light transmittance, it is easier to satisfy the translucency required for the incisal region when the zirconia sintered body is used as, for example, a dental prosthesis. The upper limit of linear light transmittance is not particularly limited, and the linear light transmittance may be, for example, 60% or less, or 50% or less. The linear light transmittance of the zirconia sintered body at 1.0 mm thickness can be measured with a turbidity meter. For example, a turbidity meter (Haze Meter NDH 4000 manufactured by Nippon Denshoku Industries Co., Ltd.) can be used to measure linear light transmittance with the use of an integrating sphere by allowing generated light from a light source to pass through and scatter from the sample. In such a measurement, it is preferable that the linear light transmittance be measured according to ISO 13468-1:1996 and JIS K 7361-1:1997, and the haze be measured according to ISO 14782-1:1999 and JIS K 7136:2000. The sample used for measurement may be a disc-shaped zirconia sintered body measuring 15 mm in diameter and 1.0 mm in thickness after it is polished to mirror finish on both sides.

A zirconia sintered body of the present invention contains ten or fewer pores, preferably eight or fewer pores, more preferably six or fewer pores with a pore (hole) diameter of 50 nm or more per 28.5 µm² cross sectional area. Having more than ten pores of a size measuring 50 nm or more in diameter may lead to a decrease of mechanical strength and translucency in the zirconia sintered body when it is a block-shaped zirconia sintered body of a desired thickness. The number of pores with a diameter of 50 nm or more per 28.5 µm² cross sectional area in a zirconia sintered body of the present invention is an arithmetic mean value obtained after taking cross section images of zirconia sintered body over a 28.5 µm² area for ten fields with a field-emission scanning electron microscope (FE-SEM), and determining the diameters of corresponding circles of pores in the captured images (the diameters of true circles having the same areas), followed by calculating the number of pores 50 nm or larger in each captured image, and dividing the calculated number by 10 after totaling the calculated numbers of pores from ten images.

A feature of a method of production of a zirconia sintered body of the present invention is that the method uses a zirconia molded body of the present invention (described below). A method of production of a zirconia sintered body of the present invention is preferably a method that comprises the step of sintering a zirconia molded body of the present invention at 900 to 1 ,200°C under ordinary pressure. It is also possible to use a zirconia pre-sintered body of the present invention (described later), and such a method is preferably one comprising the step of sintering a zirconia pre-sintered body of the present invention at 900 to 1,200°C under ordinary pressure. Such production methods enable easy production of a zirconia sintered body of the present invention that excels in both mechanical strength and translucency, and that shows excellent linear light transmittance.

### [Zirconia Molded Body]

A zirconia molded body of the present invention comprises:
a zirconia particle containing 2.0 to 9.0 mol% of yttria relative to the total number of moles of zirconium oxide and yttria, and having an average primary particle diameter of 60 nm or less;
a polyol; and
a binder,
the polyol and the binder satisfying the relational formula X1 < Y1 < X2 < Y2 ≤ 500°C, where X1 represents a combustion start temperature of the polyol, X2 represents a combustion end temperature of the polyol, Y1 represents a combustion start temperature of the binder, and Y2 represents a combustion end temperature of the binder, in which X1 and Y1 represent temperatures at which a 0.5% weight reduction is observed, and X2 and Y2 represent temperatures at which a 99.5% weight reduction is observed relative to the pre-heating weight of 100% measured by thermogravimetry.

By using such a zirconia molded body, a zirconia sintered body can be obtained that excels in both mechanical strength and translucency, and that shows excellent linear light transmittance, despite that the zirconia molded body contains a binder (and even with a thickness of 10 mm or more). It also becomes possible to achieve both formability in the molded body and translucency in the sintered body.

A zirconia molded body of the present invention has high translucency, and can be fabricated into a zirconia sintered body that shows high linear light transmittance, and a zirconia pre-sintered body that can be fabricated into a zirconia sintered body having high linear light transmittance. Specifically, a zirconia molded body of the present invention has a ΔL*(W-B) of preferably 5 or more, more preferably 8 or more, even more preferably 10 or more at a thickness of 1.5 mm. The ΔL*(W-B) may be 11 or more, or 12 or more. With these ranges of ΔL*(W-B), a zirconia sintered body that shows high linear light transmittance can be obtained when the zirconia molded body is sintered under ordinary pressure with the polyol and binder combined to satisfy the foregoing formula. The upper limit of ΔL*(W-B) is not particularly limited, and ΔL*(W-B) may be, for example, 30 or less, or 25 or less. The ΔL*(W-B) of the zirconia molded body at 1.5 mm thickness can be measured with a spectrophotometer, for example, the spectrophotometer CM-3610A manufactured by Konica Minolta Japan. In such a measurement of ΔL*(W-B), reflected light can be measured using an F11 illuminant. The sample used for the measurement may be a disc-shaped zirconia molded body measuring 20 mm in diameter and 1.5 mm in thickness. Here, ΔL*(W-B) means the difference between the lightness (L*) against a white background and the lightness (L*) against a black background. Specifically, it means the difference between the L* value of a 1.5 mm-thick zirconia molded body against a white background, and the L* value of the same zirconia molded body against a black background. The L* value is an L* value of chromaticity (color space) according to the L*a*b* color system (JIS Z 8781-4:2013). Here, the white background means the white part of the hiding-power test paper described in JIS K 5600-4-1:1999, Part 4, Section 1, and the black background means the black part of the hiding-power test paper.

A zirconia molded body containing a fluorescent agent represents a preferred example of a raw material to be sintered when the zirconia sintered body contains a fluorescent agent. The fluorescent agent content in a zirconia molded body containing a fluorescent agent may be appropriately adjusted according to factors such as the content of the fluorescent agent in the zirconia sintered body to be obtained. Specifically, the content of the fluorescent agent in the zirconia molded body is preferably 0.001 mass% or more, more preferably 0.005 mass% or more, even more preferably 0.01 mass% or more, and is preferably 1 mass% or less, more preferably 0.5 mass% or less, even more preferably 0.1 mass% or less in terms of an oxide of a metallic element contained in the fluorescent agent, relative to 100 mass% of zirconia contained in the zirconia molded body.

A zirconia molded body containing a colorant represents a preferred example of a raw material to be sintered when the zirconia sintered body contains a colorant. The colorant content in a zirconia molded body containing a colorant may be appropriately adjusted according to factors such as the content of the colorant in the zirconia sintered body to be obtained. Specifically, the content of the colorant in the zirconia molded body is preferably 0.001 mass% or more, more preferably 0.005 mass% or more, even more preferably 0.01 mass% or more, and is preferably 5 mass% or less, more preferably 1 mass% or less, even more preferably 0.5 mass% or less in terms of an oxide of a metallic element contained in the colorant, relative to 100 mass% of zirconia contained in the zirconia molded body. The colorant content may be 0.1 mass% or less, or 0.05 mass% or less.

A zirconia molded body containing a translucency adjuster represents a preferred example of a raw material to be sintered when the zirconia sintered body contains a translucency adjuster. The translucency adjuster content in a zirconia molded body containing a translucency adjuster may be appropriately adjusted according to factors such as the content of the translucency adjuster in the zirconia sintered body to be obtained. Specifically, the content of the translucency adjuster in the zirconia molded body is preferably 0.1 mass% or less relative to 100 mass% of zirconia contained in the zirconia molded body.

A zirconia molded body of the present invention may contain the same amount of yttria as the zirconia sintered body to be obtained, within the 2.0 to 9.0 mol% range relative to the total number of moles of zirconium oxide and yttria. Specifically, the yttria content in the zirconia molded body is 2.0 mol% or more, preferably 3.0 mol% or more, more preferably 3.5 mol% or more, even more preferably 4.0 mol% or more, and is preferably 8.0 mol% or less, more preferably 7.5 mol% or less, even more preferably 7.0 mol% or less.

The density of a zirconia molded body of the present invention depends on factors such as the method of its production. However, for considerations such as providing a dense zirconia sintered body, the density is preferably 3.0 g/cm³ or more, more preferably 3.2 g/cm³ or more, even more preferably 3.4 g/cm³ or more. The upper limit of density is not particularly limited, and the density may be, for example, 6.0 g/cm³ or less, or 5.8 g/cm³ or less.

A zirconia molded body of the present invention is not limited to particular shapes, and may have a desired shape according to intended use. However, the preferred shapes include disc shapes and prism shapes (e.g., cuboidal) for considerations such as ease of handling of when obtaining a zirconia pre-sintered body to be used as a mill blank for the production of dental materials such as dental prostheses. In the production of the zirconia molded body, a shape corresponding to the shape desired for the final zirconia sintered body can be imparted to the zirconia molded body by employing a method such as stereolithography, as will be described later. The present invention also encompasses zirconia molded bodies having such desired shapes. The zirconia molded body may have a monolayer structure or a multilayer structure. With a multilayer structure, the final zirconia sintered body can also have a multilayer structure, allowing for localized changes in properties such as translucency.

In view of considerations such as ease of handling, a zirconia molded body of the present invention has a biaxial flexural strength ranging preferably from 2 to 10 MPa, more preferably 5 to 8 MPa. The biaxial flexural strength of the zirconia molded body can be measured in compliance with JIS T 6526:2018.

Preferably, a zirconia molded body of the present invention has a crystal grain size of 180 nm or less after being sintered at 900 to 1,200°C for 2 hours under ordinary pressure (after being formed into a zirconia sintered body). This enables easy production of a zirconia sintered body of the present invention having excellent translucency. For considerations such as obtaining a zirconia sintered body with more superior translucency, the crystal grain size is more preferably 140 nm or less, even more preferably 120 nm or less, particularly preferably 110 nm or less. The crystal grain size may be 100 nm or less. The lower limit of crystal grain size is not particularly limited, and the crystal grain size may be, for example, 50 nm or more, or 70 nm or more. The method of measurement of crystal grain size is as described above in the description of the crystal grain size of the zirconia sintered body.

Preferably, a zirconia molded body of the present invention has a three-point flexural strength of 500 MPa or more after being sintered at 900 to 1,200°C under ordinary pressure (after being formed into a zirconia sintered body). This enables easy production of a zirconia sintered body of the present invention having excellent mechanical strength. For considerations such as obtaining a zirconia sintered body with more superior mechanical strength, the three-point flexural strength is more preferably 600 MPa or more, even more preferably 650 MPa or more, particularly preferably 700 MPa or more, most preferably 800 MPa or more. The upper limit of three-point flexural strength is not particularly limited, and the three-point flexural strength may be, for example, 1,500 MPa or less, or 1,000 MPa or less. The method of measurement of three-point flexural strength is as described above in the description of the three-point flexural strength of the zirconia sintered body.

Preferably, a zirconia molded body of the present invention has a transmittance of 40% or more for light of 700 nm wavelength at a thickness of 0.5 mm after being sintered at 900°C to 1,200°C under ordinary pressure (after being formed into a zirconia sintered body). This enables easy production of a zirconia sintered body of the present invention having excellent translucency. For considerations such as obtaining a zirconia sintered body with more superior translucency, the transmittance is more preferably 45% or more, even more preferably 46% or more, particularly preferably 48% or more, most preferably 50% or more. The transmittance may be 52% or more. The upper limit of transmittance is not particularly limited, and the transmittance may be, for example, 60% or less, or 57% or less. The method of measurement of transmittance is as described above in the description of the transmittance of the zirconia sintered body for light of 700 nm wavelength at a thickness of 0.5 mm.

A zirconia molded body of the present invention has a linear light transmittance of preferably 1% or more, more preferably 3% or more, even more preferably 5% or more, particularly preferably 7% or more at a thickness of 1.0 mm after being sintered at 900°C to 1,200°C under ordinary pressure (after being formed into a zirconia sintered body). The linear light transmittance may be 10% or more. With these ranges of linear light transmittance, it is easier to satisfy the translucency required for the incisal region when the intended use is, for example, a dental prosthesis. The upper limit of linear light transmittance is not particularly limited, and the linear light transmittance may be, for example, 60% or less, or 50% or less. The method of measurement of linear light transmittance is as described above in the description of the linear light transmittance of the zirconia sintered body at a thickness of 1.0 mm.

A certain preferred embodiment of the present invention is, for example, a zirconia molded body having ten or fewer pores with a diameter of 50 nm or more per 28.5 µm² cross sectional area after being sintered at 900 to 1,200°C under ordinary pressure. The preferred range of pore numbers and the preferred measurement method thereof are as described above in conjunction with the zirconia sintered body.

### [Production Method of Zirconia Molded Body]

The method of production of a zirconia molded body of the present invention is not particularly limited, as long as the present invention can exhibit its effects. However, for easy production of a zirconia sintered body of the present invention that excels in both translucency and mechanical strength, the method is preferably one that comprises the molding step of molding zirconia particles, a polyol, and a binder to obtain a zirconia molded body. The polyol and binder combination is not particularly limited, as long as the foregoing relational formula is satisfied. The specific materials will be described later.

Preferably, the zirconia particles used have the same yttria content as the zirconia molded body, and, in turn, the zirconia pre-sintered body and zirconia sintered body. Specifically, the yttria content in the zirconia particles is 2.0 mol% or more, preferably 3.0 mol% or more, more preferably 3.5 mol% or more, even more preferably 4.0 mol% or more, and is preferably 8.0 mol% or less, more preferably 7.5 mol% or less, even more preferably 7.0 mol% or less.

The zirconia particles used have an average primary particle diameter of 60 nm or less. Aside from having an average primary particle diameter of 60 nm or less, the zirconia particles preferably contain 0.5 mass% or less of zirconia particles having a particle diameter of more than 100 nm, relative to the total amount of zirconia particles. This enables easy production of a zirconia molded body of the present invention, and, in turn, a zirconia pre-sintered body and a zirconia sintered body of the present invention. In view of considerations such as ease of production of a zirconia molded body of the present invention, and, in turn, a zirconia pre-sintered body and a zirconia sintered body of the present invention, the average primary particle diameter of zirconia particles is preferably 50 nm or less, more preferably 30 nm or less, even more preferably 20 nm or less, and may be 10 nm or less. In the same respect, the average primary particle diameter of zirconia particles is preferably 1 nm or more, more preferably 5 nm or more. In view of considerations such as ease of production of a zirconia molded body of the present invention, and, in turn, a zirconia pre-sintered body and a zirconia sintered body of the present invention, and ease of obtaining the desired linear light transmittance, the fraction of zirconia particles with a particle diameter of more than 100 nm is more preferably 0.3 mass% or less, even more preferably 0.1 mass% or less, and may be 0.05 mass% or less. As an example, the average primary particle diameter of zirconia particles can be determined by taking an image of zirconia particles (primary particles) with a transmission electron microscope (TEM), and finding the mean value of particle diameters (maximum diameters) after measuring the diameters of arbitrarily selected 100 particles in the captured image. The content of zirconia particles with a particle diameter of more than 100 nm can be measured by volume with a laser diffraction/scattering particle size distribution analyzer (LA-950 manufactured by Horiba Ltd.) after dispersing the zirconia particles in methanol.

The method used to prepare zirconia particles is not particularly limited. It is possible to employ a method, for example, such as the breakdown process, in which coarse particles are pulverized into a fine powder, and the building-up process, which synthesizes particles through nucleation and growth from atoms or ions. The building-up process is preferred to obtain high-purity fine zirconia particles.

The breakdown process can be performed by using, for example, a ball mill or a bead mill for pulverization. Here, it is preferable to use a microsize pulverization medium, for example, a pulverization medium of 100 µm or less. In view of obtaining the desired ΔL*(W-B) and the desired linear light transmittance, it is preferable to classify the zirconia particles obtained after pulverization of coarse particles. For classification, known methods and devices can be used, for example, such as a porous film (e.g., a membrane filter with a pore size of 100 nm), and a classification device (wet classification device, dry classification device).

Examples of the building-up process include:
vapor-phase pyrolysis that precipitates oxides through pyrolysis while vaporizing high-vapor-pressure oxoacid salts or organometallic compounds of metal ions;
gas phase reaction whereby a gas-phase chemical reaction between a gas of high-vapor-pressure metal compounds and a reactant gas is performed for synthesis;
evaporative concentration that heats and vaporizes raw materials, and condenses the vapor into fine particles through rapid cooling in an inert gas of a predetermined pressure;
the melt process that forms a powder by cooling and solidifying small droplets of a melt;
solvent evaporation that evaporates a solvent to increase the solution concentration and create a supersaturated state for precipitation; and
the precipitation process whereby poorly soluble compounds such as oxides or hydroxides are precipitated through the process of nucleation and growth by bringing the solute concentration into a supersaturated state by a reaction or hydrolysis with a precipitating agent.

The precipitation process can be classified into different categories, some of which include:
homogenous precipitation in which a precipitating agent is generated in a solution through chemical reaction to eliminate local concentration nonuniformity of precipitating agent;
coprecipitation in which a precipitating agent is added to simultaneously precipitate more than one metal ion present in the solution;
hydrolysis that forms oxides or hydroxides through hydrolysis from a metal salt solution or an alcohol solution such as an alcohol solution of metal alkoxides; and
solvothermal synthesis that forms oxides or hydroxides from a high-temperature high-pressure fluid.

The solvothermal synthesis can be further divided into, for example, hydrothermal synthesis that uses water as solvent, and supercritical synthesis in which a supercritical fluid such as water or carbon dioxide is used as solvent.

It is preferable to increase the precipitation rate to obtain finer zirconia particles, irrespective of which building-up process is used. In view of obtaining the desired ΔL*(W-B) and the desired linear light transmittance, it is preferable to classify the zirconia particles obtained. For classification, known methods and devices can be used, for example, such as a porous film (e.g., a membrane filter with a pore size of 100 nm), and a classification device (wet classification device, dry classification device).

Examples of the zirconium source in the building-up process include nitrates, acetates, chlorides, and alkoxides, specifically, zirconium oxychloride, zirconium acetate, and zirconyl nitrate.

Yttria may be added in the zirconia particle production process to bring the yttria content of zirconia particles within the foregoing ranges. For example, yttria may be dissolved in zirconia particles as a solid solution. Examples of the yttrium source include nitrates, acetates, chlorides, and alkoxides, specifically, yttrium chloride, yttrium acetate, and yttrium nitrate.

The zirconia particles may be optionally subjected to a surface treatment in advance with a known surface treatment agent such as an organic compound having an acidic group; a fatty acid amide such as a saturated fatty acid amide, an unsaturated fatty acid amide, a saturated fatty acid bisamide, or an unsaturated fatty acid bisamide; or an organometallic compound such as a silane coupling agent (an organosilicon compound), an organotitanium compound, an organozirconium compound, or an organoaluminum compound. A surface treatment of zirconia particles allows for adjustments of miscibility with liquids having a surface tension of 50 mN/m or less at 25°C when a powder containing zirconia particles and a fluorescent agent is prepared using a slurry containing such a liquid in the dispersion medium, or adjustments of miscibility between zirconia particles and a polymerizable monomer when the zirconia molded body is produced by using a method that includes the step of polymerizing a composition containing zirconia particles, a fluorescent agent, and a polymerizable monomer, as will be described later. Preferred among the foregoing surface treatment agents are organic compounds having an acidic group because such compounds exhibit excellent miscibility with liquids having a surface tension of 50 mN/m or less at 25°C, and can improve the mechanical strength of the zirconia molded body by improving the chemical bonding between zirconia particles and a polymerizable monomer.

Examples of the organic compounds having an acidic group include organic compounds having at least one acidic group such as a phosphoric acid group, a carboxylic acid group, a pyrophosphoric acid group, a thiophosphoric acid group, a phosphonic acid group, and a sulfonic acid group. Preferred are phosphoric acid group-containing organic compounds containing at least one phosphoric acid group, and carboxylic acid group-containing organic compounds having at least one carboxylic acid group. More preferred are phosphoric acid group-containing organic compounds. The zirconia particles may be surface treated with one surface treatment agent, or may be surface treated with two or more surface treatment agents. In the case where the zirconia particles are surface treated with two or more surface treatment agents, the surface-treated layer may be a mixture of two or more surface treatment agents, or may be a multilayer structure with a plurality of surface-treated layers.

Examples of the phosphoric acid group-containing organic compounds include 2-ethylhexylacid phosphate, stearylacid phosphate, 2-(meth)acryloyloxyethyl dihydrogen phosphate, 3-(meth)acryloyloxypropyl dihydrogen phosphate, 4-(meth)acryloyloxybutyl dihydrogen phosphate, 5-(meth)acryloyloxypentyl dihydrogen phosphate, 6-(meth)acryloyloxyhexyl dihydrogen phosphate, 7-(meth)acryloyloxyheptyl dihydrogen phosphate, 8-(meth)acryloyloxyoctyl dihydrogen phosphate, 9-(meth)acryloyloxynonyl dihydrogen phosphate, 10-(meth)acryloyloxydecyl dihydrogen phosphate, 11-(meth)acryloyloxyundecyl dihydrogen phosphate, 12-(meth)acryloyloxydodecyl dihydrogen phosphate, 16-(meth)acryloyloxyhexadecyl dihydrogen phosphate, 20-(meth)acryloyloxyicosyl dihydrogen phosphate, bis[2-(meth)acryloyloxyethyl]hydrogen phosphate, bis[4-(meth)acryloyloxybutyl]hydrogen phosphate, bis[6-(meth)acryloyloxyhexyl]hydrogen phosphate, bis[8-(meth)acryloyloxyoctyl]hydrogen phosphate, bis[9-(meth)acryloyloxynonyl]hydrogen phosphate, bis[10-(meth)acryloyloxydecyl]hydrogen phosphate, 1,3-di(meth)acryloyloxypropyl dihydrogen phosphate, 2-(meth)acryloyloxyethylphenyl hydrogen phosphate, 2-(meth)acryloyloxyethyl-2-bromoethyl hydrogen phosphate, bis[2-(meth)acryloyloxy-(1-hydroxymethyl)ethyl]hydrogen phosphate, and acid chlorides, alkali metal salts, and ammonium salts of these.

Examples of the carboxylic acid group-containing organic compounds include succinic acid, oxalic acid, octanoic acid, decanoic acid, stearic acid, polyacrylic acid, 4-methyloctanoic acid, neodecanoic acid, pivalic acid, 2,2-dimethylbutyric acid, 3,3-dimethylbutyric acid, 2,2-dimethylvaleric acid, 2,2-diethylbutyric acid, 3,3-diethylbutyric acid, naphthenic acid, cyclohexane dicarboxylic acid, (meth)acrylic acid, N-(meth)acryloylglycine, N-(meth)acryloylaspartic acid, O-(meth)acryloyltyrosine, N-(meth)acryloyltyrosine, N-(meth)acryloyl-p-aminobenzoic acid, N-(meth)acryloyl-o-aminobenzoic acid, p-vinyl benzoic acid, 2-(meth)acryloyloxybenzoic acid, 3-(meth)acryloyloxybenzoic acid, 4-(meth)acryloyloxybenzoic acid, N-(meth)acryloyl-5-aminosalicylic acid, N-(meth)acryloyl-4-aminosalicylic acid, 2-(meth)acryloyloxyethyl hydrogen succinate, 2-(meth)acryloyloxyethyl hydrogen phthalate, 2-(meth)acryloyloxyethyl hydrogen maleate, 2-(2-(2-methoxyethoxy)ethoxy)acetic acid (commonly known as MEEAA), 2-(2-methoxyethoxy)acetic acid (commonly known as MEAA), succinic acid mono[2-(2-methoxyethoxy)ethyl]ester, maleic acid mono[2-(2-methoxyethoxy)ethyl]ester, glutaric acid mono[2-(2-methoxyethoxy)ethyl]ester, malonic acid, glutaric acid, 6-(meth)acryloyloxyhexane-1,1-dicarboxylic acid, 9-(meth)acryloyloxynonane-1,1-dicarboxylic acid, 10-(meth)acryloyloxydecane-1,1-dicarboxylic acid, 11-(meth)acryloyloxyundecane-1,1-dicarboxylic acid, 12-(meth)acryloyloxydodecane-1,1-dicarboxylic acid, 13-(meth)acryloyloxytridecane-1,1-dicarboxylic acid, 4-(meth)acryloyloxyethyltrimellitate, 4-(meth)acryloyloxybutyltrimellitate, 4-(meth)acryloyloxyhexyltrimellitate, 4-(meth)acryloyloxydecyltrimellitate, 2-(meth)acryloyloxyethyl-3'-(meth)acryloyloxy-2'-(3,4-dicarboxybenzoyloxy)propylsuccinate, and acid anhydrides, acid halides, alkali metal salts, and ammonium salts of these.

Organic compounds having at least one acidic group other than the above (e.g., a pyrophosphoric acid group, a thiophosphoric acid group, a phosphonic acid group, a sulfonic acid group) may be, for example, compounds described in WO2012/042911.

Examples of the saturated fatty acid amides include palmitamide, stearamide, and behenamide. Examples of the unsaturated fatty acid amides include oleamide and erucamide. Examples of the saturated fatty acid bisamides include ethylenebispalmitamide, ethylenebisstearamide, and hexamethylenebisstearamide. Examples of the unsaturated fatty acid bisamides include ethylenebisoleamide, hexamethylenebisoleamide, and N,N'-dioleylsebacamide.

Examples of the silane coupling agents (organosilicon compounds) include compounds represented by R¹ₙSiX₄₋ₙ (where R¹ is a C1 to C12 substituted or unsubstituted hydrocarbon group, X is a C1 to C4 alkoxy group, a hydroxyl group, a halogen atom, or a hydrogen atom, n is an integer of 0 to 3, and R¹ and X each may be the same or different when R¹ or X is plural).

Specific examples of the silane coupling agents (organosilicon compounds) include methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, isobutyltrimethoxysilane, vinyltrimethoxysilane, vinyltriethoxysilane, vinyltris(β-methoxyethoxy)silane, 3,3,3-trifluoropropyltrimethoxysilane, methyl-3,3,3-trifluoropropyldimethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloyloxypropylmethyldimethoxysilane, γ-methacryloyloxypropylmethyldiethoxysilane, N-(β-aminoethyl)γ-aminopropylmethyldimethoxysilane, N-(β-aminoethyl)γ-aminopropyltrimethoxysilane, N-(β-aminoethyl)γ-aminopropyltriethoxysilane, γ-aminopropyltrimethoxysilane, γ-aminopropyltriethoxysilane, N-phenyl-γ-aminopropyltrimethoxysilane, γ-mercaptopropyltrimethoxysilane, trimethylsilanol, methyltrichlorosilane, methyldichlorosilane, dimethyldichlorosilane, trimethylchlorosilane, phenyltrichlorosilane, diphenyldichlorosilane, vinyltrichlorosilane, trimethylbromosilane, diethylsilane, vinyltriacetoxysilane, ω-(meth)acryloyloxyalkyltrimethoxysilane [3 to 12 carbon atoms between the (meth)acryloyloxy group and the silicon atom; e.g., γ-methacryloyloxypropyltrimethoxysilane], and ω-(meth)acryloyloxyalkyltriethoxysilane [3 to 12 carbon atoms between the (meth)acryloyloxy group and the silicon atom; e.g., γ-methacryloyloxypropyltriethoxysilane]. In this specification, the notation "(meth)acryloyl" is intended to be inclusive of both methacryloyl and acryloyl.

Preferred among these are silane coupling agents having a functional group, more preferably ω-(meth)acryloyloxyalkyltrimethoxysilane [3 to 12 carbon atoms between the (meth)acryloyloxy group and the silicon atom], ω-(meth)acryloyloxyalkyltriethoxysilane [3 to 12 carbon atoms between the (meth)acryloyloxy group and the silicon atom], vinyltrimethoxysilane, vinyltriethoxysilane, vinyltriacetoxysilane, and γ-glycidoxypropyltrimethoxysilane.

Examples of the organotitanium compounds include tetramethyl titanate, tetraisopropyl titanate, tetra-n-butyl titanate, butyl titanate dimer, and tetra(2-ethylhexyl)titanate.

Examples of the organozirconium compounds include zirconium isopropoxide, zirconium n-butoxide, zirconium acetylacetonate, and zirconyl acetate.

Examples of the organoaluminum compounds include aluminum acetylacetonate, and aluminum-organic acid salt chelate compounds.

The surface treatment method is not particularly limited to specific methods, and may be a known method, for example, a method that adds the surface treatment agent by spraying it while vigorously stirring the zirconia particles, or a method that disperses or dissolves the zirconia particles and the surface treatment agent in a suitable solvent, and removes the solvent. The solvent may be a dispersion medium containing a liquid having a surface tension of 50 mN/m or less at 25°C, such as those described below. Alternatively, the zirconia particles and the surface treatment agent may be subjected to a reflux or a high-temperature high-pressure process (such as autoclaving) after being dispersed or dissolved.

The polyol and binder used in the present invention satisfy the relational formula X1 < Y1 < X2 < Y2 ≤ 500°C, where X1 is a combustion start temperature of the polyol, X2 is a combustion end temperature of the polyol, Y1 is a combustion start temperature of the binder, and Y2 is a combustion end temperature of the binder. By selecting a combination that satisfies this relationship, the polyol appears to create a burn-off route for the binder inside the zirconia molded body, allowing the binder to be more easily removed during sintering. Specifically, when the average primary particle diameter of the zirconia particles contained in the zirconia molded body is 60 nm or less, the particles tend to join together during heating due to their fine particle size (necking phenomenon), filling the spaces between particles, and disabling thorough removal of binder by heating. However, by using the polyol and the binder in combinations that satisfy the foregoing relational formula, the polyol acts to create a burn-off route for the binder inside the zirconia molded body, allowing the binder to be completely removed during sintering. Despite the peculiar issue that the binder does not easily burn off when it is contained in the zirconia molded body in an amount assuming a thickness of 10 mm or more, the present invention can resolve this issue associated with zirconia molded bodies that contain a binder, providing a zirconia sintered body that exhibits excellent mechanical strength and excellent translucency after sintering. The zirconia sintered body also excels in linear light transmittance.

Thermogravimetry (TG) can be used for the measurement of the combustion start temperature (X1) of the polyol, the combustion end temperature (X2) of the polyol, the combustion start temperature (Y1) of the binder, and the combustion end temperature (Y2) of the binder. In the present invention, X1 and Y1 denote temperatures at which a 0.5% weight reduction is observed, and X2 and Y2 denote temperatures at which a 99.5% weight reduction is observed relative to the pre-heating weight of 100%. The measurement conditions for thermogravimetry (TG) are as described in the EXAMPLES section below.

The polyol used in the present invention may be, for example, a diol or triol. The diol may be, for example, ethylene glycol, propylene glycol, diethylene glycol, 3-methyl-1,5-pentanediol, 2-methylpentane-2,4-diol, 3-methyl-1,3-butanediol, or polyethylene glycol. The triol may be, for example, glycerin, 1,2,3-butanediol, or 1,2,4-butanediol. Aside from these polyols, polyglycerin and sugars can be used, for example. The polyol may be used alone, or two or more thereof may be used in combination. With the zirconia molded body containing a polyol and a binder selected and combined to satisfy the foregoing relational formula, it is possible with such a relationship with the binder to reduce the number of pores that occur in the zirconia pre-sintered body and zirconia sintered body obtained after the zirconia molded body containing a binder is sintered, enabling the resulting zirconia sintered body to have excellent mechanical strength and translucency in the desired shape and thickness. Accordingly, the type of polyol is not particularly limited as long as it is selected to satisfy the foregoing relational formula, and the present invention can exhibit its effects with such a polyol.

Examples of the binder used in the present invention include polyvinyl alcohol, methyl cellulose, carboxymethyl cellulose, acrylic binders, wax binders, polyvinyl butyral, polymethyl methacrylate, and ethylcellulose. The binder may be used alone, or two or more thereof may be used in combination. For the same reason described for the polyol, the type of binder is not particularly limited as long as it is selected to satisfy the foregoing relational formula, and the present invention can exhibit its effects with such a binder.

X1 is preferably 50°C or more, more preferably 70°C or more, even more preferably 90°C or more. X1 is preferably 300°C or less, more preferably 250°C or less, even more preferably 200°C or less. With an X1 of 50°C or more, it is easier to control the outflow of polyol from the zirconia molded body, and the zirconia molded body can exhibit excellent shape retention. With an X1 of 300°C or less, the binding between zirconia particles will not be inhibited, making it easier to provide the desired properties.

Y2 is 500°C or less, preferably 480°C or less, more preferably 460°C or less, even more preferably 440°C or less. With a Y2 of more than 500°C, the joined zirconia particles may fail to withstand the pressure of generated gas from the combustion of the binder, raising a possibility of breakage in the zirconia pre-sintered body.

In a zirconia molded body of the present invention, Y1 > X1 to enable the polyol to burn off before the binder during sintering, and create a burn-off route for the binder inside the zirconia molded body so that the binder can burn off before necking occurs. In view of this, Y1 - X1 is preferably 5°C or more, more preferably 15°C or more, even more preferably 30°C or more.

In a zirconia molded body of the present invention, Y2 > X2 to enable the polyol to burn off before the binder during sintering, and create a burn-off route for the binder inside the zirconia molded body so that the binder can burn off before necking occurs. In view of this, Y2 - X2 is preferably 30°C or more, more preferably 40°C or more, even more preferably 45°C or more.

The polyol content in a zirconia molded body of the present invention (the content in terms of an oxide of a metallic element, relative to 100 mass% of zirconia) is not particularly limited, and is preferably 8 mass% or less, more preferably 4 mass% or less relative to 100 mass% of zirconia. In view of providing more superior translucency in the zirconia sintered body, the polyol content is even more preferably 1.5 mass% or less. The polyol content is preferably 0.01 mass% or more, more preferably 0.05 mass% or more, even more preferably 0.1 mass% or more. By combining the polyol with the binder in these polyol content ranges, the zirconia sintered body can have fewer pores even when the zirconia molded body has a thickness of 10 mm or more. In the present invention, the content of polyol and binder means an externally added percentage, expressed in mass% relative to 100 mass% of zirconia (zirconium oxide, including yttrium oxide).

The binder content in a zirconia molded body of the present invention (the content in terms of an oxide of a metallic element, relative to 100 mass% of zirconia) is not particularly limited, and is preferably less than 10 mass%, more preferably 5 mass% or less, even more preferably 3 mass% or less relative to 100 mass% of zirconia. The binder content is preferably 0.01 mass% or more, more preferably 0.05 mass% or more, even more preferably 0.1 mass% or more. By combining the binder with the polyol in these binder content ranges, the zirconia sintered body can have fewer pores even when the zirconia molded body has a thickness of 10 mm or more.

The proportions of the binder and polyol (mass ratio) in a zirconia molded body of the present invention are not particularly limited, and the binder:polyol ratio is preferably 10:1 to 1:10, more preferably 5:1 to 1:5. In view of providing more superior translucency in the zirconia sintered body, the binder:polyol ratio is more preferably 3:1 to 1:4, particularly preferably 2.5:1 to 1.1:1.

A certain preferred embodiment is, for example, a zirconia molded body comprising:
a zirconia particle containing 2.0 to 9.0 mol% of yttria relative to the total number of moles of zirconium oxide and yttria, and having an average primary particle diameter of 60 nm or less;
a polyol; and
a binder,
wherein the binder content relative to 100 mass% of zirconia is 0.05 mass% or more,
the polyol content relative to 100 mass% of zirconia is 0.01 mass% or more, and
the polyol and the binder satisfy the relational formula X1 < Y1 < X2 < Y2 ≤ 500°C. (The symbols in the formula are as described above.)
In this preferred embodiment, it is preferable that the polyol content be equal to or less than the binder content, more preferably less than the binder content, even more preferably less than the binder content by 0.1 mass% or more. Variables such as the binder content, polyol content, and zirconia particles may be appropriately set within the ranges presented in this specification. For example, the binder content may be 0.2 mass% or more, or 7 mass% or less, relative to 100 mass% of zirconia.

A preferred embodiment of the present invention is, for example, a zirconia molded body having a thickness of 10 mm or more. The zirconia molded body has a thickness of preferably 12 mm or more, more preferably 15 mm or more. The shape of the zirconia molded body with a thickness of 10 mm or more is not particularly limited, and may be a block shape (cuboidal), for example.

In the present invention, the molding step is not particularly limited when the zirconia molded body is produced by a method that includes the molding step of molding zirconia particles. However, in view of considerations such as the ability to easily produce a zirconia molded body of the present invention, and, in turn, a zirconia pre-sintered body and zirconia sintered body of the present invention, it is preferable that the molding step be at least one of the following:
(i) a step of slip casting a slurry containing zirconia particles;
(ii) a step of gel casting a slurry containing zirconia particles;
(iii) a step of press forming a powder containing zirconia particles;
(iv) a step of molding a composition containing zirconia particles and resin; and
(v) a step of polymerizing a composition containing zirconia particles and polymerizable monomer.

### · A Slurry Containing Zirconia Particles

The method of preparing a slurry containing zirconia particles is not particularly limited, and the slurry may be, for example, one obtained through the breakdown process or building-up process, or one that is commercially available.

When preparing a zirconia molded body of the present invention containing a binder and a polyol, it is preferable that the binder and polyol be mixed with a zirconia particle-containing slurry in a liquid state such as a solution or dispersion. When the zirconia molded body, and, in turn, the zirconia pre-sintered body and zirconia sintered body contain a colorant and/or a translucency adjuster, the colorant and/or translucency adjuster may be contained in a slurry containing zirconia particles and a fluorescent agent. In this case, it is preferable that the colorant and/or translucency adjuster be individually mixed with the zirconia particle-containing slurry in a liquid state such as a solution or dispersion.

### · A Powder Containing Zirconia Particles

The method of preparing a powder containing zirconia particles is not particularly limited. For considerations such as the ability to provide a more uniform zirconia sintered body of even superior properties, it is preferable that the powder be obtained by drying the slurry containing zirconia particles. The slurry to be dried may additionally contain a fluorescent agent, a colorant, or a translucency adjuster, individually or in any combination.

The drying method is not particularly limited, and may be, for example, atomization drying (spray drying), supercritical drying, freeze drying, hot-air drying, or vacuum drying. For considerations such as the ability to provide a denser zirconia sintered body by inhibiting particle aggregation during drying, preferred is any of spray drying, supercritical drying, and freeze drying, more preferably spray drying or supercritical drying, even more preferably spray drying.

The zirconia particle-containing slurry to be dried may be a slurry with water used as dispersion medium. However, for considerations such as the ability to provide a denser zirconia sintered body by inhibiting particle aggregation during drying, the slurry is preferably one that uses a dispersion medium other than water, such as an organic solvent.

Examples of the organic solvent include:
alcohols such as methanol, ethanol, 1-propanol, 2-propanol, 1-butanol, 2-butanol, 2-methyl-2-propanol, 2-methoxyethanol, 2-ethoxyethanol, 2-(2-ethoxyethoxy)ethanol, diethylene glycol monobutyl ether, and glycerin;
ketones such as acetone, and methyl ethyl ketone;
ethers such as tetrahydrofuran, diethyl ether, diisopropyl ether, 1,4-dioxane, and dimethoxyethane (including modified ethers such as propylene glycol monomethyl ether acetate (commonly known as PGMEA) (preferably ether-modified ethers and/or ester-modified ethers, more preferably ether-modified alkylene glycols and/or ester-modified alkylene glycols));
esters such as ethyl acetate, and butyl acetate;
hydrocarbons such as hexane and toluene; and
halogenated hydrocarbons such as chloroform, and carbon tetrachloride.
The organic solvents may be used alone, or two or more thereof may be used in combination. Considering both body's safety and ease of removal, the organic solvent is preferably a water-soluble organic solvent. Specifically, ethanol, 2-propanol, 2-methyl-2-propanol, 2-ethoxyethanol, 2-(2-ethoxyethoxy)ethanol, propylene glycol monomethyl ether acetate, acetone, and tetrahydrofuran are more preferred.

It is preferable that the dispersion medium of a slurry containing zirconia particles and a fluorescent agent before drying contain a liquid having a surface tension of 50 mN/m or less at 25°C, particularly when using spray drying. This is preferable because a denser zirconia sintered body can be obtained by inhibiting particle aggregation during drying. In view of this, the liquid has a surface tension of preferably 40 mN/m or less, more preferably 30 mN/m or less.

The surface tension at 25°C may have values presented in, for example, Handbook of Chemistry and Physics. For liquids that are not described in this handbook, the values presented in WO2014/126034 may be used. For liquids that are not described in either of these publications, the surface tension can be determined following a known measurement method, for example, such as the ring method or the Wilhelmy method. Preferably, the surface tension at 25°C is measured with the automatic surface tensiometer CBVP-Z manufactured by Kyowa Interface Science Co., Ltd., or SIGMA 702 manufactured by KSV INSTRUMENTS LTD.

The liquid may be an organic solvent having the surface tension above. The organic solvent may be any of the foregoing organic solvents, provided that it has the surface tension specified above. However, for considerations such as the ability to provide a denser zirconia sintered body by inhibiting particle aggregation during drying, preferred is at least one selected from the group consisting of methanol, ethanol, 2-methoxyethanol, 1,4-dioxane, 2-ethoxyethanol, and 2-(2-ethoxyethoxy)ethanol, more preferably at least one selected from the group consisting of methanol, ethanol, 2-ethoxyethanol, and 2-(2-ethoxyethoxy)ethanol.

For considerations such as the ability to provide a denser zirconia sintered body by inhibiting particle aggregation during drying, the content of the liquid in the dispersion medium is preferably 50 mass% or more, more preferably 80 mass% or more, even more preferably 95 mass% or more, particularly preferably 99 mass% or more.

A slurry using a dispersion medium other than water can be obtained by replacing the dispersion medium of a slurry dispersed in water. The method used to replace the dispersion medium is not particularly limited, and may be, for example, a method that removes water by distillation after adding a dispersion medium other than water (e.g., an organic solvent) to a slurry dispersed in water. For removal of water by distillation, the dispersion medium other than water may be distilled away with water, either partially or entirely. The addition of a dispersion medium other than water, and the removal of water by distillation may be repeated multiple times. As an alternative method, the dispersoid may be precipitated after adding a dispersion medium other than water to a slurry dispersed in water. Alternatively, the dispersion medium after replacement with a specific organic solvent in a slurry dispersed in water may be replaced with yet another organic solvent.

The fluorescent agent may be added after replacing the dispersion medium. However, for considerations such as the ability to provide a more uniform zirconia sintered body of even superior properties, it is preferable to add the fluorescent agent before replacing the dispersion medium. Similarly, when containing a colorant and/or a translucency adjuster in the slurry, these may be added after replacing the dispersion medium. However, for considerations such as the ability to provide a more uniform zirconia sintered body of even superior properties, it is preferable to add the colorant and/or translucency adjuster before replacing the dispersion medium.

The zirconia particle-containing slurry to be dried may be one that has been subjected to a dispersion process under heat and pressure, such as a reflux process or hydrothermal treatment. The zirconia particle-containing slurry to be subjected to the drying process may be one that has been subjected to a mechanical dispersion process with, for example, a roll mill, a colloid mill, a high-pressure jet disperser, an ultrasonic disperser, a vibration mill, a planetary mill, or a bead mill. The slurry may be subjected to only one of these processes, or two or more of these processes.

Aside from the binder and polyol, the zirconia particle-containing slurry to be dried may comprise one additional component or two or more additional components such as a dispersant, an emulsifier, an antifoaming agent, a pH adjuster, and a lubricant. By containing these components (particularly, a dispersant or an antifoaming agent, for example) in addition to the binder, it may be possible to inhibit particle aggregation during drying, and obtain a denser zirconia sintered body.

Examples of the dispersant include ammonium polycarboxylates (such as triammonium citrate), ammonium polyacrylates, acryl copolymer resins, acrylic acid ester copolymers, polyacrylic acid, bentonite, carboxymethyl cellulose, anionic surfactants (for example, polyoxyethylene alkyl ether phosphoric acid esters such as polyoxyethylene lauryl ether phosphoric acid ester), non-ionic surfactants, olein glycerides, amine surfactants, and oligosaccharide alcohols.

Examples of the emulsifier include alkyl ethers, phenyl ethers, sorbitan derivatives, and ammonium salts.

Examples of the antifoaming agents include alcohols, polyethers, polyethylene glycol, silicone, and waxes.

Examples of the pH adjusters include ammonia, ammonium salts (including ammonium hydroxides such as tetramethylammonium hydroxide), alkali metal salts, and alkali-earth metal salts.

Examples of the lubricant include polyoxyethylene alkylate ethers, and waxes.

For considerations such as the ability to provide a denser zirconia sintered body by inhibiting particle aggregation during drying, the water content in the zirconia particle-containing slurry to be dried is preferably 3 mass% or less, more preferably 1 mass% or less, even more preferably 0.1 mass% or less. The water content can be measured with a Karl Fischer aquameter.

The drying conditions in the foregoing drying methods are not particularly limited, and known drying conditions may be appropriately adopted. When using an organic solvent as a dispersion medium, it is preferable that drying be performed in the presence of a nonflammable gas, more preferably nitrogen, in order to reduce the risk of explosion during drying.

In the case of supercritical drying, the supercritical fluid is not particularly limited, and may be, for example, water or carbon dioxide. However, the supercritical fluid is preferably carbon dioxide for considerations such as the ability to provide a denser zirconia sintered body by inhibiting particle aggregation.

### · A Composition Containing Zirconia Particles and Resin

The method of preparation of a composition containing zirconia particles and resin is not particularly limited, and a composition containing zirconia particles and resin can be obtained by, for example, mixing the zirconia particle-containing powder with resin.

### · A Composition Containing Zirconia Particles and Polymerizable Monomer

The method of preparation of a composition containing zirconia particles and polymerizable monomer is not particularly limited, and a composition containing zirconia particles and polymerizable monomer can be obtained by, for example, mixing the zirconia particle-containing powder with a polymerizable monomer.

### (i) Slip Casting

When the zirconia molded body is produced using a method that includes the step of slip casting a slurry containing zirconia particles, the slip casting method is not particularly limited to specific methods, and may be, for example, a method that dries the zirconia particle-containing slurry after pouring it in a mold.

For considerations such as ease of pouring the slurry into a mold, and increasing the reusability of the mold in addition to preventing excessive drying time, the content of the dispersion medium in the zirconia particle-containing slurry used is preferably 80 mass% or less, more preferably 50 mass% or less, even more preferably 20 mass% or less.

The slurry may be poured into a mold under ordinary pressure. However, in view of production efficiency, it is preferable to pour the slurry under applied pressure conditions. The mold used for slip casting is not particularly limited, and the mold may be, for example, a porous mold made of a material such as plaster, resin, or ceramic. Resin or ceramic porous molds are superior in terms of durability.

In addition to the binder and polyol, the zirconia particle-containing slurry used for slip casting may contain one additional component or two or more additional components such as the dispersant, emulsifier, antifoaming agent, pH adjuster, and lubricant mentioned earlier.

### (ii) Gel Casting

When a zirconia molded body is produced using a method that includes the step of gel casting a slurry containing zirconia particles, the gel casting method is not particularly limited to specific methods, and may be, for example, a method that dries a moist body shaped in a mold by gelling a slurry containing zirconia particles and a fluorescent agent.

For considerations such as preventing excessive drying time and reducing cracking during drying, the content of the dispersion medium contained in the zirconia particle-containing slurry used is preferably 80 mass% or less, more preferably 50 mass% or less, even more preferably 20 mass% or less.

The gelation may be achieved by, for example, adding a gelatinizer, or by adding and polymerizing a polymerizable monomer. The mold used is not particularly limited, and may be, for example, a porous mold made of a material such as plaster, resin, or ceramic, or a non-porous mold made of a material such as metal or resin.

The gelatinizer is not particularly limited, and may be, for example, a water-soluble gelatinizer. Specifically, preferred are agarose and gelatin, for example. The gelatinizer may be used alone, or two or more thereof may be used in combination. In view of considerations such as a reduction of cracking during sintering, the gelatinizer is used in an amount of preferably 10 mass% or less, more preferably 5 mass% or less, even more preferably 1 mass% or less based on the mass the slurry after the addition of gelatinizer.

The polymerizable monomer is not particularly limited, and may be, for example, 2-hydroxyethyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, propylene glycol mono(meth)acrylate, glycerol mono(meth)acrylate, erythritol mono(meth)acrylate, N-methylol(meth)acrylamide, N-hydroxyethyl(meth)acrylamide, or N,N-bis(2-hydroxyethyl)(meth)acrylamide. The polymerizable monomer may be used alone, or two or more thereof may be used in combination.

In view of considerations such as a reduction of cracking during sintering, the polymerizable monomer is used in an amount of preferably 10 mass% or less, more preferably 5 mass% or less, even more preferably 1 mass% or less based on the mass the slurry after the addition of polymerizable monomer.

When gelation is performed through polymerization of a polymerizable monomer, it is preferable to use a polymerization initiator for polymerization. The polymerization initiator is not particularly limited. Particularly preferred are photopolymerization initiators. A photopolymerization initiator can be appropriately selected from photopolymerization initiators used in industry, particularly photopolymerization initiators used in dentistry.

Specific examples of the photopolymerization initiators include (bis)acylphosphine oxides (including salts), thioxanthones (including salts such as quaternary ammonium salts), ketals, α-diketones, coumarins, anthraquinones, benzoin alkyl ether compounds, and α-aminoketone compounds. The photopolymerization initiators may be used alone, or two or more thereof may be used in combination. Preferred among these photopolymerization initiators is at least one selected from the group consisting of a (bis)acylphosphine oxide and an α-diketone. With these photopolymerization initiators, it is possible to achieve polymerization (gelation) both in the ultraviolet region (including the near ultraviolet region) and the visible region. Specifically, polymerization (gelation) can sufficiently take place irrespective of whether the light source used is a laser such as an Ar laser or a He-Cd laser, or a lamp such as a halogen lamp, a xenon lamp, a metal halide lamp, a light emitting diode (LED), a mercury lamp, or a fluorescent lamp.

Examples of acylphosphine oxides in the (bis)acylphosphine oxides include 2,4,6-trimethylbenzoyldiphenylphosphine oxide (commonly known as TPO), 2,6-dimethoxybenzoyldiphenylphosphine oxide, 2,6-dichlorobenzoyldiphenylphosphine oxide, 2,4,6-trimethylbenzoylmethoxyphenylphosphine oxide, 2,4,6-trimethylbenzoylethoxyphenylphosphine oxide, 2,3,5,6-tetramethylbenzoyldiphenylphosphine oxide, benzoyl di(2,6-dimethylphenyl)phosphonate, sodium salts of 2,4,6-trimethylbenzoylphenylphosphine oxide, potassium salts of 2,4,6-trimethylbenzoyldiphenylphosphine oxide, and ammonium salts of 2,4,6-trimethylbenzoyldiphenylphosphine oxide.

Examples of bisacylphosphine oxides in the (bis)acylphosphine oxides include bis(2,6-dichlorobenzoyl)phenylphosphine oxide, bis(2,6-dichlorobenzoyl)-2,5-dimethylphenylphosphine oxide, bis(2,6-dichlorobenzoyl)-4-propylphenylphosphine oxide, bis(2,6-dichlorobenzoyl)-1-naphthylphosphine oxide, bis(2,6-dimethoxybenzoyl)phenylphosphine oxide, bis(2,6-dimethoxybenzoyl)-2,4,4-trimethylpentylphosphine oxide, bis(2,6-dimethoxybenzoyl)-2,5-dimethylphenylphosphine oxide, bis(2,4,6-trimethylbenzoyl)phenylphosphine oxide, and bis(2,3,6-trimethylbenzoyl)-2,4,4-trimethylpentylphosphine oxide. Other examples include compounds described in JP 2000-159621 A.

Preferred among these (bis)acylphosphine oxides are 2,4,6-trimethylbenzoyldiphenylphosphine oxide, 2,4,6-trimethylbenzoylmethoxyphenylphosphine oxide, bis(2,4,6-trimethylbenzoyl)phenylphosphine oxide, and sodium salts of 2,4,6-trimethylbenzoylphenylphosphine oxide.

Examples of the α-diketones include diacetyl, benzyl, camphorquinone, 2,3-pentadione, 2,3-octadione, 9,10-phenanthrenequinone, 4,4'-oxybenzyl, and acenaphthenequinone. Preferred is camphorquinone, particularly in situations where a visible light source is used.

Aside from the binder and polyol, the zirconia particle-containing slurry used for gel casting may additionally contain one additional component or two or more additional components such as the dispersant, emulsifier, antifoaming agent, pH adjuster, and lubricant mentioned earlier, as with the case of the slurry used for slip casting.

The method used to dry the shaped moist body is not particularly limited, and may be, for example, natural drying, hot-air drying, vacuum drying, drying by dielectric heating, drying by induction heating, or drying under constant temperature and humidity. These methods may be used alone, or two or more thereof may be used in combination. In view of considerations such as the ability to reduce cracking during drying, preferred are natural drying, drying by dielectric heating, drying by induction heating, and drying under constant temperature and humidity.

### (iii) Press Forming

When the zirconia molded body is produced using a method that comprises the step of press forming a powder containing zirconia particles, the press forming method is not particularly limited to specific methods, and a known press forming machine can be used. Specific examples of the pressing forming method include uniaxial pressing. In order to increase the density of the zirconia molded body obtained, it is preferable that uniaxial pressing be followed by a cold isostatic pressing (CIP) process.

Aside from the binder and polyol, the zirconia particle-containing powder used for press forming may additionally contain one additional component or two or more additional components such as the dispersant, emulsifier, antifoaming agent, pH adjuster, and lubricant mentioned earlier. These components may be added during the preparation of the powder.

### (iv) Molding of Resin-Containing Composition

When the zirconia molded body is produced using a method that comprises the step of molding a composition containing zirconia particles and resin, the method used to mold the composition is not particularly limited to specific methods, and may be, for example, injection molding, cast molding, or extrusion molding. It is also possible to use additive fabrication techniques (such as 3D printing) to mold the composition, including, for example, fused deposition modeling (FDM), the inkjet method, and the powder/binder lamination method. Preferred among these molding methods are injection molding and cast molding, more preferably injection molding.

The resin is not particularly limited, and is preferably one that can be used as a raw material of molding. Specific examples of the resin include paraffin wax, polyvinyl alcohol, polyethylene, polypropylene, ethylene-vinyl acetate copolymer, polystyrene, atactic polypropylene, methacrylic resin, and fatty acids such as stearic acid. These resins may be used alone, or two or more thereof may be used in combination.

Aside from the binder and polyol, the composition containing zirconia particles and resin may additionally contain one additional component or two or more additional components such as the dispersant, emulsifier, antifoaming agent, pH adjuster, and lubricant mentioned earlier.

### (v) Polymerization of Composition Containing Polymerizable Monomer

By polymerizing a composition containing zirconia particles and polymerizable monomer, the polymerizable monomer in the composition can polymerize, allowing the composition to cure. When the zirconia molded body is produced using a method that comprises such a polymerization step, the method is not particularly limited to specific methods, and may be, for example, (a) a method by which a composition containing zirconia particles and polymerizable monomer is polymerized in a mold, or (b) stereolithography (SLA) using a composition containing zirconia particles and polymerizable monomer. The preferred method is (b), stereolithography. Stereolithography enables the zirconia molded body to have a shape corresponding to the shape desired for the final zirconia sintered body, at the time of its production. This makes stereolithography a potentially preferred method in certain situations, particularly when a zirconia sintered body of the present invention is used as a dental material such as a dental prosthesis.

The polymerizable monomer in the composition containing zirconia particles and polymerizable monomer is not particularly limited, and may be a monofunctional polymerizable monomer such as a monofunctional (meth)acrylate or a monofunctional (meth)acrylamide, or a polyfunctional polymerizable monomer such as a bifunctional aromatic compound, a bifunctional aliphatic compound, or a tri- and higher-functional compound. The polymerizable monomer may be used alone, or two or more thereof may be used in combination. Preferred for use are polyfunctional polymerizable monomers, particularly in situations where stereolithography is employed.

Examples of the monofunctional (meth)acrylate include:
(meth)acrylates having a hydroxyl group, such as 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, propylene glycol mono(meth)acrylate, glycerol mono(meth)acrylate, and erythritol mono(meth)acrylate;
alkyl (meth)acrylates such as methyl (meth)acrylate, ethyl (meth)acrylate, propyl (meth)acrylate, isopropyl (meth)acrylate, n-butyl (meth)acrylate, sec-butyl (meth)acrylate, t-butyl (meth)acrylate, isobutyl (meth)acrylate, n-hexyl (meth)acrylate, lauryl (meth)acrylate, cetyl (meth)acrylate, and stearyl (meth)acrylate;
alicyclic (meth)acrylates such as cyclohexyl (meth)acrylate, and isobornyl (meth)acrylate;
aromatic group-containing (meth)acrylates such as benzyl (meth)acrylate, and phenyl (meth)acrylate; and
(meth)acrylates having a functional group, such as 2,3-dibromopropyl (meth)acrylate, 3-(meth)acryloyloxypropyltrimethoxysilane, and 11-(meth)acryloyloxyundecyltrimethoxysilane.

Examples of the monofunctional (meth)acrylamide include (meth)acrylamide, N-(meth)acryloylmorpholine, N,N-dimethyl(meth)acrylamide, N,N-diethyl(meth)acrylamide, N,N-di-n-propyl(meth)acrylamide, N,N-di-n-butyl(meth)acrylamide, N,N-di-n-hexyl(meth)acrylamide, N,N-di-n-octyl(meth)acrylamide, N,N-di-2-ethylhexyl(meth)acrylamide, N-hydroxyethyl(meth)acrylamide, and N,N-bis(2-hydroxyethyl)(meth)acrylamide.

In view of excellent polymerizability, preferred among these monofunctional polymerizable monomers are (meth)acrylamide, more preferably N-(meth)acryloylmorpholine, N,N-dimethyl(meth)acrylamide, and N,N-diethyl(meth)acrylamide.

Examples of the bifunctional aromatic compound include 2,2-bis((meth)acryloyloxyphenyl)propane, 2,2-bis[4-(3-(meth)acryloyloxy-2-hydroxypropoxy)phenyl]propane, 2,2-bis[4-(3-methacryloyloxy-2-hydroxypropoxy)phenyl]propane (commonly known as Bis-GMA), 2,2-bis(4-(meth)acryloyloxyethoxyphenyl)propane, 2,2-bis(4-(meth)acryloyloxypolyethoxyphenyl)propane, 2,2-bis(4-(meth)acryloyloxydiethoxyphenyl)propane, 2,2-bis(4-(meth)acryloyloxytetraethoxyphenyl)propane, 2,2-bis(4-(meth)acryloyloxypentaethoxyphenyl)propane, 2,2-bis(4-(meth)acryloyloxydipropoxyphenyl)propane, 2-(4-(meth)acryloyloxydiethoxyphenyl)-2-(4-(meth)acryloyloxyethoxyphenyl)propane, 2-(4-(meth)acryloyloxydiethoxyphenyl)-2-(4-(meth)acryloyloxytriethoxyphenyl)propane, 2-(4-(meth)acryloyloxydipropoxyphenyl)-2-(4-(meth)acryloyloxytriethoxyphenyl)propane, 2,2-bis(4-(meth)acryloyloxypropoxyphenyl)propane, 2,2-bis(4-(meth)acryloyloxyisopropoxyphenyl)propane, and 1,4-bis(2-(meth)acryloyloxyethyl)pyromellitate. In view of excellent polymerizability and providing a zirconia molded body having superior mechanical strength, preferred are 2,2-bis[4-(3-methacryloyloxy-2-hydroxypropoxy)phenyl]propane (commonly known as Bis-GMA), and 2,2-bis(4-(meth)acryloyloxypolyethoxyphenyl)propane. Preferred as 2,2-bis(4-(meth)acryloyloxypolyethoxyphenyl)propane is 2,2-bis(4-methacryloyloxypolyethoxyphenyl)propane (a compound with an average of 2.6 moles of ethoxy group added; commonly known as D-2.6E).

Examples of the bifunctional aliphatic compound include glycerol di(meth)acrylate, ethylene glycol di(meth)acrylate, diethylene glycol di(meth)acrylate, triethylene glycol di(meth)acrylate, propylene glycol di(meth)acrylate, butylene glycol di(meth)acrylate, neopentyl glycol di(meth)acrylate, polyethylene glycol di(meth)acrylate, 1,3-butanediol di(meth)acrylate, 1,4-butanediol di(meth)acrylate, 1,6-hexanediol di(meth)acrylate, 2-ethyl-1,6-hexanediol di(meth)acrylate, 1,9-nonanediol di(meth)acrylate, 1,10-decanediol di(meth)acrylate, 1,2-bis(3-methacryloyloxy-2-hydroxypropoxy)ethane, 2,2,4-trimethylhexamethylenebis(2-carbamoyloxyethyl)dimethacrylate (commonly known as UDMA). In view of excellent polymerizability and providing a zirconia molded body having superior mechanical strength, preferred are triethylene glycol dimethacrylate (commonly known as TEGDMA), and 2,2,4-trimethylhexamethylenebis(2-carbamoyloxyethyl)dimethacrylate.

Examples of the tri- and higher-functional compound include trimethylolpropane tri(meth)acrylate, trimethylolethane tri(meth)acrylate, trimethylolmethane tri(meth)acrylate, pentaerythritol tri(meth)acrylate, pentaerythritol tetra(meth)acrylate, dipentaerythritol penta(meth)acrylate, N,N-(2,2,4-trimethylhexamethylene)bis[2-(aminocarboxy)propane-1,3-diol]tetra(meth)acrylate, and 1,7-diacryloyloxy-2,2,6,6-tetra(meth)acryloyloxymethyl-4-oxaheptane. In view of excellent polymerizability and providing a zirconia molded body having superior mechanical strength, preferred are N,N-(2,2,4-trimethylhexamethylene)bis[2-(aminocarboxy)propane-1,3-diol]tetramethacrylate, and 1,7-diacryloyloxy-2,2,6,6-tetraacryloyloxymethyl-4-oxaheptane.

In both methods (a) and (b), it is preferable that the composition be polymerized using a polymerization initiator, and that the composition additionally comprise a polymerization initiator. The polymerization initiator is not particularly limited. Particularly preferred are photopolymerization initiators. A photopolymerization initiator may be appropriately selected from photopolymerization initiators used in industry, preferably photopolymerization initiators used in dentistry. Specific examples of the photopolymerization initiators are no different from those mentioned above in the description of gel casting, and repetition is omitted.

Aside from the binder and polyol, the composition containing zirconia particles and polymerizable monomer may additionally contain one additional component or two or more additional components such as the dispersant, emulsifier, antifoaming agent, pH adjuster, and lubricant mentioned earlier.

When the zirconia molded body is produced by stereolithography using a composition containing zirconia particles and polymerizable monomer, the stereolithography method is not particularly limited to specific methods, and a known method may be appropriately selected for stereolithography. For example, it is possible to use a method that produces the desired zirconia molded body by successively forming layers in desired shapes through photopolymerization of a liquid composition with, for example, ultraviolet light or a laser, using a stereolithography device.

When the zirconia molded body is produced by stereolithography, it is preferable that the composition containing zirconia particles and polymerizable monomer have the highest possible content of zirconia particles, in view of considerations such as sinterability in a later step. Specifically, the content of the zirconia particles in the composition is preferably 20 mass% or more, more preferably 30 mass% or more, even more preferably 40 mass% or more, particularly preferably 50 mass% or more. In stereolithography, it is preferable for the viscosity of the composition to fall in a certain range, for reasons related to the principles of layer-to-layer formation. In this respect, the content of the zirconia particles in the composition is preferably 90 mass% or less, more preferably 80 mass% or less, even more preferably 70 mass% or less, particularly preferably 60 mass% or less. Adjusting the viscosity of the composition can be particularly important when implementing the constrained surface method, which involves curing layers by applying light through the bottom of a vat from its lower side to successively form layers of zirconia molded body, in order to enable the composition to form a new layer by smoothly flowing into the space between the bottom surface of the cured layer and the bottom of the vat after the cured layer is elevated by one layer thickness.

Specifically, the composition has a viscosity of preferably 20,000 mPa·s or less, more preferably 10,000 mPas or less, even more preferably 5,000 mPa s or less in terms of a viscosity at 25°C. The viscosity is preferably 100 mPa·s or more. Because the composition tends to increase its viscosity with increasing content of zirconia particles, it is preferable to appropriately adjust the balance between zirconia particle content and viscosity in the composition, taking into consideration a balance between the rate of stereolithography and the precision of the zirconia molded body produced, depending on factors such as the capabilities of the stereolithography device used. The viscosity can be measured with an E-type viscometer.

In a method of production of a zirconia molded body of the present invention, the zirconia molded body may be subjected to a CIP process after a humidification process, in order to further improve the density of the zirconia molded body. When press forming is performed, the zirconia particle-containing powder may be subjected to press forming after a humidification process, before pressing the powder. Any known methods can be used for the humidification process, including a method that sprays water with a sprayer or the like, and a method that uses a constant humidity chamber or a constant temperature and humidity chamber. The amount of moisture increase after the humidification process is preferably higher than 2 mass%, more preferably higher than 3 mass%, even more preferably higher than 4 mass%, particularly preferably higher than 5 mass%, and is preferably 15 mass% or less, more preferably 13 mass% or less, even more preferably 11 mass% or less relative to the mass of the powder (powder before humidification process) and molded body before wetting, though the amount of moisture increase depends on factors such as the particle size of the zirconia particles contained. The amount of moisture increase by humidification process can be determined as a percentage by subtracting the mass of the powder and molded body before wetting from the mass of the wetted powder (powder after humidification process) and molded body, and dividing the difference by the mass of the powder and molded body before wetting.

### [Zirconia Pre-Sintered Body]

Another embodiment of the present invention is, for example, a zirconia pre-sintered body comprising 2.0 to 9.0 mol% of yttria relative to the total number of moles of zirconium oxide and yttria,
the zirconia pre-sintered body having a ΔL*(W-B) of 5 or more at a thickness of 1.5 mm, and having ten or fewer pores with a diameter of 50 nm or more per 28.5 µm² cross sectional area, and a thickness of 10 mm or more after being sintered at 900 to 1,200°C.

With such a zirconia pre-sintered body, a zirconia sintered body can be obtained that excels in both mechanical strength and translucency, and that shows excellent linear light transmittance. The definition of ΔL*(W-B) is the same as that defined for the zirconia molded body. The number of pores with a diameter of 50 nm or more can be measured using the same method described above for the zirconia sintered body in conjunction with the number of pores with a diameter 50 nm or more. The zirconia pre-sintered body has a thickness of preferably 12 mm or more, more preferably 15 mm or more. The shape of the zirconia pre-sintered body with a thickness of 10 mm or more is not particularly limited, and may be a block shape (cuboidal), for example.

When a zirconia sintered body of the present invention contains a fluorescent agent, a zirconia pre-sintered body containing a fluorescent agent represents a preferred example of the raw material to be sintered. The fluorescent agent content in the zirconia pre-sintered body containing a fluorescent agent can be appropriately adjusted according to factors such as the content of the fluorescent agent in the zirconia sintered body to be obtained. Specifically, the content of the fluorescent agent in the zirconia pre-sintered body is preferably 0.001 mass% or more, more preferably 0.005 mass% or more, even more preferably 0.01 mass% or more, and is preferably 1 mass% or less, more preferably 0.5 mass% or less, even more preferably 0.1 mass% or less in terms of an oxide of a metallic element contained in the fluorescent agent, relative to 100 mass% of zirconia contained in the zirconia pre-sintered body.

When the zirconia sintered body contains a colorant, a zirconia pre-sintered body containing a colorant represents a preferred example of the raw material to be sintered. The colorant content in the zirconia pre-sintered body containing a colorant can be appropriately adjusted according to factors such as the content of the colorant in the zirconia sintered body to be obtained. Specifically, the content of the colorant in the zirconia pre-sintered body is preferably 0.001 mass% or more, more preferably 0.005 mass% or more, even more preferably 0.01 mass% or more, and is preferably 5 mass% or less, more preferably 1 mass% or less, even more preferably 0.5 mass% or less in terms of an oxide of a metallic element contained in the colorant, relative to 100 mass% of zirconia contained in the zirconia pre-sintered body. The colorant content may be 0.1 mass% or less, or 0.05 mass% or less.

When the zirconia sintered body contains a translucency adjuster, a zirconia pre-sintered body containing a translucency adjuster represents a preferred example of the raw material to be sintered. The translucency adjuster content in the zirconia pre-sintered body containing a translucency adjuster can be appropriately adjusted according to factors such as the content of the translucency adjuster in the zirconia sintered body to be obtained. Specifically, the content of the translucency adjuster in the zirconia pre-sintered body is preferably 0.1 mass% or less relative to 100 mass% of zirconia contained in the zirconia pre-sintered body.

A zirconia pre-sintered body of the present invention may have the same yttria content as the zirconia sintered body to be obtained, within a range of 2.0 to 9.0 mol%. Specifically, the yttria content in the zirconia pre-sintered body is 2.0 mol% or more, preferably 3.0 mol% or more, more preferably 3.5 mol% or more, even more preferably 4.0 mol% or more, and is preferably 8.0 mol% or less, more preferably 7.5 mol% or less, even more preferably 7.0 mol% or less.

The density of a zirconia pre-sintered body of the present invention is not particularly limited, and preferably ranges from 3.0 to 6.0 g/m³, more preferably 3.2 to 5.8 g/m³, depending on factors such as the method of production of the zirconia molded body used for the production of the zirconia pre-sintered body.

A zirconia pre-sintered body of the present invention is not limited to particular shapes, and may be shaped as desired for intended use. However, the preferred shapes include disc shapes and prism (e.g., cuboidal) shapes for considerations such as ease of handling of when the zirconia pre-sintered body is used as a mill blank for the production of a dental material such as a dental prosthesis. The zirconia pre-sintered body may be cut (milled) into desired shapes for different applications before being fabricated into a zirconia sintered body, as will be described later. The present invention also encompasses such zirconia pre-sintered bodies of desired shapes after cutting (milling). The zirconia pre-sintered body may have a monolayer structure or a multilayer structure. With a multilayer structure, the final zirconia sintered body can also have a multilayer structure, allowing for localized changes in properties such as translucency.

In view of considerations such as retaining the shape of the workpiece during processing using a milling machine, as well as the ease of milling itself, a zirconia pre-sintered body of the present invention has a three-point flexural strength of preferably 10 to 70 MPa, more preferably 20 to 60 MPa. The three-point flexural strength of the zirconia pre-sintered body can be measured for a 5 mm × 40 mm × 10 mm specimen using a universal testing machine at a span length (the distance between supports) of 30 mm with a crosshead speed of 0.5 mm/min.

Preferably, a zirconia pre-sintered body of the present invention has a crystal grain size of 180 nm or less after being sintered at 900 to 1,200°C for 2 hours under ordinary pressure (after being formed into a zirconia sintered body). This enables easy production of a zirconia sintered body of the present invention having excellent translucency. For considerations such as providing a zirconia sintered body having more superior translucency, the crystal grain size is more preferably 140 nm or less, even more preferably 120 nm or less, particularly preferably 115 nm or less. The crystal grain size may be 110 nm or less. The lower limit of crystal grain size is not particularly limited, and the crystal grain size may be, for example, 50 nm or more, or 100 nm or more. The method of measurement of crystal grain size is as described above in the description of the crystal grain size of the zirconia sintered body.

A zirconia pre-sintered body of the present invention has a ΔL*(W-B) of 5 or more, preferably 7 or more at a thickness of 1.5 mm. The ΔL*(W-B) at a thickness of 1.5 mm may be 10 or more. With these ranges of ΔL*(W-B), a zirconia sintered body can be obtained that shows high linear light transmittance when sintered under ordinary pressure. The upper limit of ΔL*(W-B) is not particularly limited, and may be, for example, 30 or less, or 25 or less. The ΔL*(W-B) of the zirconia pre-sintered body at 1.5 mm thickness can be measured using the same method described for the zirconia molded body, with the exception that the measurement sample is the zirconia pre-sintered body, instead of the zirconia molded body.

Preferably, a zirconia pre-sintered body of the present invention has a three-point flexural strength of 500 MPa or more after being sintered at 900 to 1,200°C under ordinary pressure (after being formed into a zirconia sintered body). This enables easy production of a zirconia sintered body of the present invention having excellent mechanical strength. For considerations such as providing a zirconia sintered body having more superior mechanical strength, the three-point flexural strength is more preferably 600 MPa or more, even more preferably 650 MPa or more, particularly preferably 700 MPa or more, most preferably 800 MPa or more. The upper limit of three-point flexural strength is not particularly limited, and the three-point flexural strength may be, for example, 1,500 MPa or less, or 1,000 MPa or less. The method of measurement of three-point flexural strength is as described above in the description of the three-point flexural strength of the zirconia sintered body.

Preferably, a zirconia pre-sintered body of the present invention has a transmittance of 40% or more for light of 700 nm wavelength at a thickness of 0.5 mm after being sintered at 900 to 1,200°C under ordinary pressure (after being formed into a zirconia sintered body). This enables easy production of a zirconia sintered body of the present invention having excellent translucency. For considerations such as providing a zirconia sintered body having more superior translucency, the transmittance is more preferably 45% or more, even more preferably 46% or more, particularly preferably 48% or more, most preferably 50% or more. The transmittance may be 52% or more. The upper limit of transmittance is not particularly limited, and the transmittance may be, for example, 60% or less, or 57% or less. The method of measurement of transmittance is as described above in the description of the transmittance of the zirconia sintered body for light of 700 nm wavelength at 0.5 mm thickness.

A zirconia pre-sintered body of the present invention has a linear light transmittance of preferably 1% or more, more preferably 3% or more, even more preferably 5% or more, particularly preferably 7% or more at a thickness of 1.0 mm after being sintered at 900 to 1,200°C under ordinary pressure (after being formed into a zirconia sintered body). The linear light transmittance may be 10% or more. With these ranges of linear light transmittance, it is easier to satisfy the translucency required for the incisal region when the zirconia pre-sintered body is used as, for example, a dental prosthesis. The upper limit of linear light transmittance is not particularly limited, and the linear light transmittance may be, for example, 60% or less, or 50% or less. The method of measurement of linear light transmittance is as described above in the description of the linear light transmittance of the zirconia sintered body at 1.0 mm thickness.

### [Production Method of Zirconia Pre-Sintered Body]

A feature of a method of production of a zirconia pre-sintered body of the present invention is that the method uses, for example, a zirconia molded body of the present invention. The zirconia pre-sintered body producing method is preferably a method that comprises the step of pre-sintering the zirconia molded body at 200 to 800°C. The production method of a zirconia pre-sintered body of the present invention may comprise the step of cutting a zirconia molded body of the present invention, and may pre-sinter the zirconia molded body after cutting. The cutting method is not particularly limited, and a known device (for example, a known milling machine) and a known method may be used. In view of considerations such as ease of obtaining the desired zirconia pre-sintered body, the pre-sintering temperature is preferably 200°C or more, more preferably 250°C or more, even more preferably 300°C or more, and is preferably 800°C or less, more preferably 700°C or less, even more preferably 600°C or less. With the foregoing lower limits of pre-sintering temperature, it is possible to effectively reduce generation of organic material residues. With the foregoing upper limits of pre-sintering temperature, it is possible to reduce excessive sintering, and prevent difficulties in cutting (milling) with a milling machine.

The rate of temperature increase in pre-sintering a zirconia molded body of the present invention is not particularly limited, and is preferably 0.1 °C/min or higher, more preferably 0.2°C/min or higher, even more preferably 0.5°C/min or higher, and is preferably 50°C/min or less, more preferably 30°C/min or less, even more preferably 20°C/min or less. The productivity increases with the foregoing lower limits of rate of temperature increase. With the foregoing upper limits of rate of temperature increase, it is possible to reduce the volume difference between the interior and exterior of the zirconia molded body or zirconia pre-sintered body, and the rapid degradation of organic materials can be reduced to inhibit cracking or breakage when the zirconia molded body contains organic materials.

The pre-sintering time in pre-sintering a zirconia molded body of the present invention is not particularly limited. However, for considerations such as efficiently and stably obtaining the desired zirconia pre-sintered body with good productivity, the pre-sintering time is preferably 0.5 hours or more, more preferably 1 hour or more, even more preferably 2 hours or more, and is preferably 10 hours or less, more preferably 8 hours or less, even more preferably 6 hours or less.

In the present invention, a pre-sintering furnace can be used for pre-sintering. The pre-sintering furnace is not particularly limited, and may be a pre-sintering furnace used in industry, for example, such as an electric furnace or debinding furnace.

A zirconia pre-sintered body of the present invention can be cut (milled) into desired shapes for different applications before being formed into a zirconia sintered body. Specifically, a zirconia sintered body of the present invention excels in both translucency and mechanical strength despite containing a fluorescent agent, and is particularly suited for applications such as dental prostheses and other dental materials. In order to provide a zirconia sintered body used for these applications, the zirconia pre-sintered body can be cut (milled) into a shape corresponding to the shape of the zirconia sintered body. The cutting (milling) method is not particularly limited, and a known milling machine can be used, for example.

### [Production Method of Zirconia Sintered Body]

A zirconia sintered body of the present invention can be produced by sintering a zirconia molded body of the present invention under ordinary pressure, or by sintering a zirconia pre-sintered body of the present invention under ordinary pressure, as described above.

In view of considerations such as ease of obtaining the desired zirconia sintered body, the sintering temperature is preferably 900°C or more, more preferably 1,000°C or more, even more preferably 1,050°C or more, and is preferably 1,200°C or less, more preferably 1,150°C or less, even more preferably 1,120°C or less, regardless of whether sintering a zirconia molded body of the present invention or a zirconia pre-sintered body of the present invention. With the foregoing lower limits of sintering temperature, sintering can sufficiently proceed to easily produce a dense sintered body. With the foregoing upper limits of sintering temperature, it is possible to easily obtain a zirconia sintered body having a crystal grain size within the preferred range of the present invention, in addition to inhibiting deactivation of the fluorescent agent.

The sintering time is not particularly limited, regardless of whether sintering a zirconia molded body of the present invention or a zirconia pre-sintered body of the present invention. However, for considerations such as efficiently and stably obtaining the desired zirconia sintered body with good productivity, the sintering time is preferably 5 minutes or more, more preferably 15 minutes or more, even more preferably 30 minutes or more, and is preferably 6 hours or less, more preferably 4 hours or less, even more preferably 2 hours or less.

In the present invention, a sintering furnace can be used for sintering. The sintering furnace is not particularly limited, and may be a sintering furnace used in industry, for example, such as an electric furnace or debinding furnace. Specifically, when the intended use is dental materials, it is possible to use a dental porcelain furnace, which involves a relatively low sintering temperature, aside from conventional dental sintering furnaces for zirconia.

A zirconia sintered body of the present invention can be produced with ease, even without a HIP process. However, the translucency and mechanical strength can further improve when a HIP process follows the sintering performed under ordinary pressure.

### [Uses of Zirconia Sintered Body]

A zirconia sintered body of the present invention is not limited to particular uses. However, because a zirconia sintered body of the present invention excels in both translucency and mechanical strength, and shows excellent linear light transmittance, a zirconia sintered body of the present invention is particularly suited for applications such as dental prostheses and other dental materials, and is highly useful not only as a dental prosthesis used for the cervical region but also as a dental prosthesis used for the occlusal surface of a posterior tooth, or the incisal region of a front tooth. Particularly, a zirconia sintered body of the present invention is preferred for use as a dental prosthesis used for the incisal region of a front tooth.

### EXAMPLES

The present invention is described below in greater detail using Examples and Comparative Examples. It is to be noted, however, that the present invention is not limited by the following. The following methods were used for the measurement of various properties.

### (1) Average primary particle diameter of zirconia particles

An image of zirconia particles in a zirconia slurry was taken with a transmission electron microscope (TEM), and the particle diameter (maximum diameter) was measured for arbitrarily selected 100 particles in the captured image. The mean value of these particle diameters was then determined as the average primary particle diameter of the zirconia particles.

### (2) Fraction of particles with a particle diameter of more than 100 nm

The zirconia particles in a zirconia slurry were dispersed in methanol, and were measured by volume with a laser diffraction/scattering particle size distribution analyzer (LA-950 manufactured by Horiba Ltd.).

### (3) Crystal grain size

The crystal grain size of zirconia sintered body was measured by taking a cross section image of zirconia sintered body with a field-emission scanning electron microscope (FE-SEM), and finding the mean value of the diameters of corresponding circles of arbitrarily selected 100 particles (the diameters of true circles having the same areas) observed in the captured image.

### (4) Three-point flexural strength

The three-point flexural strength of zirconia sintered body was measured for specimens measuring 40 mm × 4 mm × 3 mm in size at a span length of 30 mm and a crosshead speed of 0.5 mm/min in compliance with ISO 6872:2015, and the mean value was determined for n = 10.

A zirconia particle-containing powder obtained through the process of Examples was uniaxially pressed into a square-bar shape (40 mm × 6 mm × 5 mm), and subjected to a cold isostatic pressing (CIP) process (pressure 170 MPa) to increase its density. The resulting zirconia molded body was then fired, and its surfaces were polished to prepare a specimen.

### (5) Light transmittance (700 nm wavelength, 0.5 mm thick)

The zirconia sintered body was measured for transmittance for light of 700 nm wavelength at 0.5 mm thickness with the use of an integrating sphere by allowing generated light from a light source to pass through and scatter from the sample, using a spectrophotometer (Hitachi spectrophotometer, Model U-3900H, manufactured by Hitachi High-Technologies Corporation). In the measurement, the transmittance for light of 700 nm wavelength was determined after measuring transmittance in the wavelength region of 300 to 750 nm. A disc-shaped zirconia sintered body, measuring 15 mm in diameter and 0.5 mm in thickness, was used as a measurement sample after it was polished to mirror finish. The mean value was determined for n = 3.

### (6) Linear light transmittance (1.0 mm thick)

The linear light transmittance of zirconia sintered body at 1.0 mm thickness was measured using a turbidity meter (Haze Meter NDH 4000 manufactured by Nippon Denshoku Industries Co., Ltd.) with the use of an integrating sphere by allowing generated light from a light source to pass through and scatter from the sample. In the measurement, the linear light transmittance was measured according to ISO 13468-1:1996 and JIS K 7361-1:1997, and the haze was measured according to ISO 14782-1:1999 and JIS K 7136:2000. A disc-shaped zirconia sintered body, measuring 15 mm in diameter and 1.0 mm in thickness, was used as a measurement sample after it was polished to mirror finish. The mean value was determined for n = 3.

### (7) Number of pores with a diameter of 50 nm or more per 28.5 µm² cross sectional area

The number of pores with a diameter of 50 nm or more per 28.5 µm² cross sectional area was determined for zirconia sintered bodies obtained by sintering block-shaped zirconia molded bodies. Specifically, the number of pores with a diameter of 50 nm or more per 28.5 µm² cross sectional area was determined as an arithmetic mean value obtained after taking cross section images of zirconia sintered body over a 28.5 µm² area for ten fields with a field-emission scanning electron microscope (FE-SEM), and determining the diameters of corresponding circles of pores in the captured images (the diameters of true circles having the same areas), followed by calculating the number of pores 50 nm or larger in each captured image, and dividing the calculated number by 10 after totaling the calculated numbers of pores from ten images. In Tables 3 to 6, the number of pores with a diameter of 50 nm or more is denoted as "Pore count for 50 nm or larger".

### (8) Appearance of zirconia sintered body

The appearance (color) of zirconia sintered body was visually evaluated.

### (9) Fluorescence of zirconia sintered body

The fluorescence of zirconia sintered body was evaluated by visually determining the presence or absence of fluorescence under UV light.

### (10) ΔL*(W-B) of zirconia molded body and zirconia pre-sintered body

The ΔL*(W-B) of zirconia molded bodies and zirconia pre-sintered bodies 1.5 mm thickness was measured with a spectrophotometer (CM-3610A manufactured by Konica Minolta Japan). In the measurement, reflected light was measured using an F11 illuminant. Disc-shaped zirconia molded bodies and zirconia pre-sintered bodies, measuring 20 mm in diameter and 1.5 mm in thickness, were used as measurement samples after polishing disc-shaped zirconia molded bodies and pre-sintered bodies to mirror finish. The mean value was determined for n = 3.

### (11) Combustion start temperatures and combustion end temperatures of polyol and binder

The polyols and binders used in Examples and Comparative Examples were measured for combustion start temperature and combustion end temperature using thermal analyzers manufactured by Rigaku Corporation (product names: Thermo plus EVO2, TG-DTA8122 (simultaneous thermogravimetry and differential thermal analyzer); analysis software: Thermo plus EVO ver2.086; sample pan: platinum; measurement atmosphere: air (100 cc/min); rate of temperature increase: 10.0°C/min; sampling interval: 1.0 second). The measured combustion start temperatures and combustion end temperatures are presented in Tables 1 and 2, along with the types of polyols and binders used.

**[Table 1]**

| | Combustion start temperature | Combustion end temperature |
|---|---|---|
| | X1 | X2 |
| | °C | °C |
| Glycerin (Manufactured by Fujifilm Wako Pure Chemical Industries, Ltd., special grade reagent) | 77 | 266 |
| Polyethylene glycol PEG-6000P (Manufactured by Sanyo Chemical Industries Ltd.) | 193 | 297 |
| Propylene glycol (Manufactured by Nacalai Tesque Inc.) | 64 | 179 |
| Polyglycerin #310 (Manufactured by Sakamoto Yakuhin Kogyo Co., Ltd.) | 72 | 410 |
| Dipentaerythritol (Manufactured by Tokyo Chemical Industry Co., Ltd.) | 219 | 398 |

| | | |
|---|---|---|
| (X1 represents a temperature at which a 0.5% weight reduction is observed, and X2 represents a temperature at which a 99.5% weight reduction is observed relative to the pre-heating weight of 100%.) | | |

**[Table 2]**

| | Combustion start temperature | Combustion end temperature |
|---|---|---|
| | Y1 | Y2 |
| | °C | °C |
| Acrylic binder KFE-124 (Manufactured by Goo Chemical Co., Ltd.) | 135 | 365 |
| Acrylic binder KFA-440 (Manufactured by Goo Chemical Co., Ltd.) | 200 | 465 |
| Acrylic binder OLYCOX KC-700 (Manufactured by Kyoeisha Chemical Co., Ltd.) | 170 | 455 |
| Acrylic binder OLYCOX KC-500 (Manufactured by Kyoeisha Chemical Co., Ltd.) | 225 | 315 |

| | | |
|---|---|---|
| (Y1 represents a temperature at which a 0.5% weight reduction is observed, and Y2 represents a temperature at which a 99.5% weight reduction is observed relative to the pre-heating weight of 100%.) | | |

### [Example 1]

A 1.0 L mixed aqueous solution of 0.62 mol/L of zirconium oxychloride and 0.038 mol/L of yttrium chloride, and a 0.5 L aqueous solution of 1.9 mol/L of sodium hydroxide were separately prepared.

After pouring 1.0 L of purified water into a precipitation vessel, the mixed aqueous solution and the sodium hydroxide aqueous solution were simultaneously poured into the vessel to obtain a slurry through coprecipitation of zirconium oxychloride and yttrium chloride.

After filtration and washing, 22.2 g of acetic acid was added into the slurry, and the slurry was subjected to a hydrothermal treatment at 200°C for 3 hours. The slurry was then centrifugally filtered through a membrane filter having a pore size of 100 nm, and purified water was added to achieve a solid concentration of 5.0 mass% (the concentration of zirconia forming a solid solution with yttria), and the coarse particles were removed to obtain a zirconia slurry. The zirconia particles contained in the zirconia slurry had an average primary particle diameter of 17 nm, with 0.33 mass% of zirconia particles having a particle diameter of 100 nm or more.

Isopropanol was added in 9 times the volume of the zirconia slurry, and these were thoroughly mixed in a centrifuge tube, and centrifuged at 4,000 rpm for 10 minutes. The supernatant was removed after confirming settling of a white material. After adding isopropanol again, the mixture was thoroughly mixed, and centrifuged at 4,000 rpm for 10 minutes. The supernatant was removed after confirming settling of a white material, and methanol was added to provide an equivalent volume to that of the zirconia slurry used. A methanol substituted slurry was obtained after thorough mixing. The remaining water content of the methanol substituted slurry was 0.08 mass% as measured with a Karl Fischer aquameter.

To the slurry were added 1 mass% of glycerin and 2 mass% of acrylic binder KFE-124, both relative to 100 mass% of zirconia. These were ultrasonically dispersed at 40 kHz for 1 hour to obtain an additive-containing slurry.

The additive-containing slurry was supercritically dried with a supercritical drying machine, using the following procedure. Specifically, the additive-containing slurry was placed in a pressure vessel, and the pressure vessel was joined to a supercritical carbon dioxide extractor. After checking for pressure leaks, the pressure vessel and the preheating tube were immersed in a water bath that had been heated to 60°C, and were left to stand for 10 minutes to stabilize after increasing temperature to 80°C and increasing pressure to 25 MPa. Thereafter, carbon dioxide was introduced under predetermined conditions, together with methanol used as an entrainer (temperature: 80°C, pressure: 25 MPa, carbon dioxide flow rate: 10 mL/min, entrainer (methanol) flow rate: 1.5 mL/min). After an elapsed time period of two hours, the addition of methanol was stopped, without halting the introduction of carbon dioxide. After two hours of sole carbon dioxide introduction, its delivery was stopped, and the pressured was gradually reduced from 25 MPa back to ordinary pressure over a time period of approximately 20 minutes while maintaining the temperature at 80°C. The pressure vessel was removed from the water bath and cooled to ordinary temperature, then opened to collect the processed sample, obtaining a powder containing zirconia particles.

The powder was uniaxially pressed into a plate shape (20 mm × 20 mm × 5 mm), a disc shape (20 mm in diameter × 2.5 mm in thickness), and a block shape (20 mm × 20 mm × 15 mm), and these were subjected to a cold isostatic pressing (CIP) process (pressure 170 MPa) to increase the density and obtain zirconia molded bodies. The zirconia molded bodies were pre-sintered at 500°C for 2 hours under ordinary pressure to obtain zirconia pre-sintered bodies. The zirconia pre-sintered bodies, excluding the block-shaped zirconia pre-sintered bodies, were sintered at 1,100°C for 2 hours under ordinary pressure to obtain zirconia sintered bodies. The zirconia sintered bodies produced were white in color. The measurement results are presented in Table 3.

The block-shaped zirconia pre-sintered bodies were separately cut into a crown shape for the maxillary central incisor, and a crown shape for the mandibular first molar, using a milling machine (KATANA^{®} H-18, manufactured by Kuraray Noritake Dental Inc.). These zirconia pre-sintered bodies were sintered at 1,100°C for 2 hours under ordinary pressure to obtain crown-shaped dental prostheses.

### [Comparative Example 1]

One mass% of glycerin was added to the methanol substituted slurry prepared in Example 1, relative to 100 mass% of zirconia, and ultrasonically dispersed at 40 kHz for 1 hour to obtain an additive-containing slurry.

A zirconia particle-containing powder, and plate-shaped and disc-shaped zirconia molded bodies, zirconia pre-sintered bodies, and zirconia sintered bodies were obtained using the same methods described in Example 1, except for using the additive-containing slurry prepared above. The zirconia sintered bodies were white in color. The measurement results are presented in Table 3. The block-shaped zirconia molded body broke upon being released from the pressure of uniaxial pressing, and the mechanical strength was insufficient, failing to produce block-shaped zirconia pre-sintered bodies and block-shaped zirconia sintered bodies.

### [Comparative Example 2]

A zirconia particle-containing powder, and plate-shaped and disc-shaped zirconia molded bodies, zirconia pre-sintered bodies, and zirconia sintered bodies were obtained using the same methods used in Comparative Example 1, except that 2 mass% of the glycerin used in Comparative Example 1 was used relative to 100 mass% of zirconia. The zirconia sintered bodies produced were white in color. The measurement results are presented in Table 3. The block-shaped zirconia molded body broke upon being released from the pressure of uniaxial pressing, and the mechanical strength was insufficient,

### [Comparative Example 3]

Two mass% of acrylic binder KFE-124 was added to the methanol substituted slurry prepared in Example 1, relative to 100 mass% of zirconia, and ultrasonically dispersed at 40 kHz for 1 hour to obtain an additive-containing slurry.

A zirconia particle-containing powder, and plate-shaped, disc-shaped, and block-shaped zirconia molded bodies, zirconia pre-sintered bodies, and zirconia sintered bodies were obtained using the same methods used in Example 1, except for using the additive-containing slurry prepared above. The zirconia sintered bodies produced were white in color. The measurement results are presented in Table 3.

### [Comparative Example 4]

A zirconia particle-containing powder, and plate-shaped, disc-shaped, and block-shaped zirconia molded bodies, zirconia pre-sintered bodies, and zirconia sintered bodies were obtained using the same methods used in Example 1, except that the polyol was changed to dipentaerythritol. The zirconia sintered bodies produced were white in color. The measurement results are presented in Table 3.

**[Table 3]**

| | | | Example | Comparative Example | | | |
|---|---|---|---|---|---|---|---|
| | | | 1 | 1 | 2 | 3 | 4 |
| | Fluorescent agent content^{(*1)} | mass% | - | - | - | - | - |
| | Colorant content^{(*1)} | mass% | - | - | - | - | - |
| | Yttria content^{(*2)} | mol% | 3 | 3 | 3 | 3 | 3 |
| | Polyol content^{(*1)} | mass% | 1 | 1 | 2 | - | 1 |
| Binder content^{(*1)} | | mass% | 2 | - | - | 2 | 2 |
| Zirconia molded body | | | | | | | |
| ΔL*(W-B) | | - | 8.3 | 8.2 | 8.3 | 3.2 | 10.8 |
| Fabrication of block molded body | | Fabrication | Possible | Not possible | Not possible | Possible | Possible |
| Zirconia pre-sintered body | | | | | | | |
| ΔL*(W-B) | | - | 7.2 | 7.1 | 7.2 | 2.2 | 1.1 |
| Zirconia sintered body | | | | | | | |
| Crystal grain size | | nm | 80 | 81 | 81 | 202 | 80 |
| | Three-point flexural strength | MPa | 1021 | 1008 | 1010 | 702 | 232 |
| | Light transmittance | | | | | | |
| (700 nm wavelength, 0.5 mm thickness) | | % | 42 | 41 | 41 | 29 | 20 |
| | Linear light transmittance (1.0 mm thickness) | % | 1.8 | 1.5 | 1.4 | 0.5 | 0.3 |
| | Pore count for 50 nm or larger | Number of pores | 5 | 4 | 4 | 11 | 16 |

| | | | | | | | |
|---|---|---|---|---|---|---|---|
| (*1) Content relative to 100 mass% of zirconia (in terms of an oxide of a metallic element) (*2) Fraction of number of moles of yttrium oxide relative to total number of moles of zirconium oxide and yttrium oxide | | | | | | | |

### [Example 2]

Tests were conducted in the same manner as in Example 1, except that 1.0 L of a mixed aqueous solution of 0.62 mol/L of zirconium oxychloride and 0.066 mol/L of yttrium chloride was used. The zirconia particles contained in the zirconia slurry had an average primary particle diameter of 18 nm, with 0.35 mass% of zirconia particles having a particle diameter of 100 nm or more.

An additive-containing slurry containing a polyol and a binder was prepared using the same method used in Example 1, except for using the above slurry. Subsequently, a zirconia particle-containing powder, and plate-shaped, disc-shaped, and block-shaped zirconia molded bodies, zirconia pre-sintered bodies, and zirconia sintered bodies were obtained using the same methods used in Example 1. The zirconia sintered bodies produced were white in color. The measurement results are presented in Table 4.

### [Example 3]

Tests were conducted in the same manner as in Example 1, except that 1.0 L of a mixed aqueous solution of 0.62 mol/L of zirconium oxychloride and 0.108 mol/L of yttrium chloride was used. The zirconia particles contained in the zirconia slurry had an average primary particle diameter of 17 nm, with 0.15 mass% of zirconia particles having a particle diameter of 100 nm or more.

An additive-containing slurry containing a polyol and a binder was prepared using the same method used in Example 1, except for using the above slurry. Subsequently, a zirconia particle-containing powder, and plate-shaped, disc-shaped, and block-shaped zirconia molded bodies, zirconia pre-sintered bodies, and zirconia sintered bodies were obtained using the same methods used in Example 1. The zirconia sintered bodies produced were white in color. The measurement results are presented in Table 4.

### [Example 4]

A dilute nitrate solution of bismuth nitrate was added to the zirconia slurry prepared in Example 2 (average primary particle diameter of 18 nm with 0.35 mass% of zirconia particles having a particle diameter of 100 nm or more), achieving a bismuth oxide (Bi₂O₃) equivalent content of 0.02 mass% relative to 100 mass% of zirconia, and producing a slurry containing zirconia particles and a fluorescent agent.

An additive-containing slurry containing a polyol and a binder was prepared using the same method used in Example 1, except for using the above slurry. Subsequently, a zirconia particle-containing powder, and plate-shaped, disc-shaped, and block-shaped zirconia molded bodies, zirconia pre-sintered bodies, and zirconia sintered bodies were obtained using the same methods used in Example 1. The zirconia sintered bodies produced were white in color, and had fluorescence. The measurement results are presented in Table 4.

### [Example 5]

A aqueous solution of nickel(II) nitrate was added to the zirconia slurry prepared in Example 2 (average primary particle diameter of 18 nm with 0.35 mass% of zirconia particles having a particle diameter of 100 nm or more), achieving a nickel(II) oxide (NiO) equivalent content of 0.02 mass% relative to 100 mass% of zirconia, and producing a slurry containing zirconia particles and a colorant.

An additive-containing slurry containing a polyol and a binder was prepared using the same method used in Example 1, except for using the above slurry. Subsequently, a zirconia particle-containing powder, and plate-shaped, disc-shaped, and block-shaped zirconia molded bodies, zirconia pre-sintered bodies, and zirconia sintered bodies were obtained using the same methods used in Example 1. The zirconia sintered bodies produced were stained red. The measurement results are presented in Table 4.

**[Table 4]**

| | | | Example | | | |
|---|---|---|---|---|---|---|
| | | | 2 | 3 | 4 | 5 |
| | Fluorescent agent content^{(*1)} | mass% | - | - | 0.02 | - |
| | Colorant content^{(*1)} | mass% | - | - | - | 0.02 |
| | Yttria content^{(*2)} | mol% | 5 | 8 | 5 | 5 |
| | Polyol content^{(*1)} | mass% | 1 | 1 | 1 | 1 |
| Binder content^{(*1)} | | mass% | 2 | 2 | 2 | 2 |
| Zirconia molded body | | | | | | |
| ΔL*(W-B) | | - | 14.3 | 16.6 | 13.3 | 13.6 |
| Fabrication of block molded body | | Fabrication | Possible | Possible | Possible | Possible |
| Zirconia pre-sintered body | | | | | | |
| ΔL*(W-B) | | - | 13.6 | 15.8 | 12.7 | 12.9 |
| Zirconia sintered body | | | | | | |
| Crystal grain size | | nm | 83 | 91 | 84 | 84 |
| | Three-point flexural strength | MPa | 840 | 603 | 802 | 811 |
| | Light transmittance | | | | | |
| | (700 nm wavelength, 0.5 mm thickness) | % | 48 | 57 | 41 | 44 |
| | Linear light transmittance (1.0 mm thickness) | % | 9.2 | 14.5 | 6.4 | 7.0 |
| | Pore count for 50 nm or larger | Number of pores | 5 | 4 | 5 | 4 |

| | | | | | | |
|---|---|---|---|---|---|---|
| (*1) Content relative to 100 mass% of zirconia (in terms of an oxide of a metallic element) (*2) Fraction of number of moles of yttrium oxide relative to total number of moles of zirconium oxide and yttrium oxide | | | | | | |

### [Example 6]

A zirconia particle-containing powder, and plate-shaped, disc-shaped, and block-shaped zirconia molded bodies, zirconia pre-sintered bodies, and zirconia sintered bodies were obtained using the same methods used in Example 2, except for using polyethylene glycol PEG-6000P as a polyol, and KFA-440 as a binder. The zirconia sintered bodies produced were white in color. The measurement results are presented in Table 5.

### [Example 7]

A zirconia particle-containing powder, and plate-shaped, disc-shaped, and block-shaped zirconia molded bodies, zirconia pre-sintered bodies, and zirconia sintered bodies were obtained using the same methods used in Example 2, except for using propylene glycol as a polyol. The zirconia sintered bodies produced were white in color. The measurement results are presented in Table 5.

### [Example 8]

A zirconia particle-containing powder, and plate-shaped, disc-shaped, and block-shaped zirconia molded bodies, zirconia pre-sintered bodies, and zirconia sintered bodies were obtained using the same methods used in Example 2, except for using polyglycerin #310 as a polyol, and KFA-440 as a binder. The zirconia sintered bodies produced were white in color. The measurement results are presented in Table 5.

**[Table 5]**

| | | | Example | | |
|---|---|---|---|---|---|
| | | | 6 | 7 | 8 |
| | Fluorescent agent content^{(*1)} | mass% | - | - | - |
| | Colorant content^{(*1)} | mass% | - | - | - |
| | Yttria content^{(*2)} | mol% | 5 | 5 | 5 |
| | Polyol content^{(*1)} | mass% | 1 | 1 | 1 |
| Binder content^{(*1)} | | mass% | 2 | 2 | 2 |
| Zirconia molded body | | | | | |
| ΔL*(W-B) | | - | 13.8 | 14.5 | 13.9 |
| Fabrication of block molded body | | Fabrication | Possible | Possible | Possible |
| Zirconia pre-sintered body | | | | | |
| ΔL*(W-B) | | - | 12.6 | 13.5 | 13.0 |
| Zirconia sintered body | | | | | |
| Crystal grain size | | nm | 84 | 82 | 79 |
| | Three-point flexural strength | MPa | 833 | 855 | 802 |
| | Light transmittance | | | | |
| (700 nm wavelength, 0.5 mm thickness) | | % | 47 | 50 | 46 |
| | Linear light transmittance (1.0 mm thickness) | % | 5.1 | 12.2 | 5.5 |
| | Pore count for 50 nm or larger | Number of pores | 7 | 3 | 6 |

| | | | | | |
|---|---|---|---|---|---|
| (*1) Content relative to 100 mass% of zirconia (in terms of an oxide of a metallic element) (*2) Fraction of number of moles of yttrium oxide relative to total number of moles of zirconium oxide and yttrium oxide | | | | | |

### [Example 9]

A zirconia particle-containing powder, and plate-shaped, disc-shaped, and block-shaped zirconia molded bodies, zirconia pre-sintered bodies, and zirconia sintered bodies were obtained using the same methods used in Example 2, except for using acrylic binder KFA-440 as a binder. The zirconia sintered bodies produced were white in color. The measurement results are presented in Table 6.

### [Example 10]

A zirconia particle-containing powder, and plate-shaped, disc-shaped, and block-shaped zirconia molded bodies, zirconia pre-sintered bodies, and zirconia sintered bodies were obtained using the same methods used in Example 2, except for using acrylic binder OLYCOX KC-700 as a binder. The zirconia sintered bodies produced were white in color. The measurement results are presented in Table 6.

### [Example 11]

A zirconia particle-containing powder, and plate-shaped, disc-shaped, and block-shaped zirconia molded bodies, zirconia pre-sintered bodies, and zirconia sintered bodies were obtained using the same methods used in Example 2, except for using acrylic binder OLYCOX KC-500 as a binder. The zirconia sintered bodies produced were white in color. The measurement results are presented in Table 6.

### [Example 12]

A zirconia particle-containing powder, and plate-shaped, disc-shaped, and block-shaped zirconia molded bodies, zirconia pre-sintered bodies, and zirconia sintered bodies were obtained using the same methods used in Example 1, except that the polyol content was changed to 2 mass%. The zirconia sintered bodies produced were white in color. The measurement results are presented in Table 6.

**[Table 6]**

| | | | Example | | | |
|---|---|---|---|---|---|---|
| | | | 9 | 10 | 11 | 12 |
| | Fluorescent agent content^{(*1)} | mass% | - | - | - | - |
| | Colorant content^{(*1)} | mass% | - | - | - | - |
| | Yttria content^{(*2)} | mol% | 5 | 5 | 5 | 5 |
| | Polyol content^{(*1)} | mass% | 1 | 1 | 1 | 2 |
| Binder content^{(*1)} | | mass% | 2 | 2 | 2 | 2 |
| Zirconia molded body | | | | | | |
| ΔL*(W-B) | | - | 12.1 | 12.4 | 15.2 | 6.2 |
| Fabrication of block molded body | | Fabrication | Possible | Possible | Possible | Possible |
| Zirconia pre-sintered body | | | | | | |
| ΔL*(W-B) | | - | 11.0 | 11.4 | 14.0 | 5.4 |
| Zirconia sintered body | | | | | | |
| Crystal grain size | | nm | 90 | 90 | 77 | 35 |
| | Three-point flexural strength | MPa | 800 | 801 | 860 | 771 |
| | Light transmittance | | | | | |
| (700 nm wavelength, 0.5 mm thickness) | | % | 41 | 44 | 52 | 36 |
| | Linear light transmittance | % | | | | |
| (1.0 mm thickness) | | | 6.9 | 8.8 | 12.2 | 1.1 |
| | Pore count for 50 nm or larger | Number of pores | 6 | 7 | 4 | 8 |

| | | | | | | |
|---|---|---|---|---|---|---|
| (*1) Content relative to 100 mass% of zirconia (in terms of an oxide of a metallic element) (*2) Fraction of number of moles of yttrium oxide relative to total number of moles of zirconium oxide and yttrium oxide | | | | | | |

## Claims

1. A zirconia molded body comprising:
a zirconia particle containing 2.0 to 9.0 mol% of yttria relative to the total number of moles of zirconium oxide and yttria, and having an average primary particle diameter of 60 nm or less;
a polyol; and
a binder,
the polyol and the binder satisfying the relational formula X1 < Y1 < X2 < Y2 ≤ 500°C, where X1 represents a combustion start temperature of the polyol, X2 represents a combustion end temperature of the polyol, Y1 represents a combustion start temperature of the binder, and Y2 represents a combustion end temperature of the binder, in which X1 and Y1 represent temperatures at which a 0.5% weight reduction is observed, and X2 and Y2 represent temperatures at which a 99.5% weight reduction is observed relative to the pre-heating weight of 100% measured by thermogravimetry.

2. The zirconia molded body according to claim 1, which has a thickness of 10 mm or more.

3. The zirconia molded body according to claim 1 or 2, wherein the polyol has a combustion start temperature (X1) of 50°C or higher.

4. The zirconia molded body according to any one of claims 1 to 3, which has a ΔL*(W-B) of 5 or more at a thickness of 1.5 mm.

5. The zirconia molded body according to any one of claims 1 to 4, which has a crystal grain size of 180 nm or less after being sintered at 900 to 1,200°C under ordinary pressure.

6. The zirconia molded body according to any one of claims 1 to 5, which has a three-point flexural strength of 500 MPa or more after being sintered at 900 to 1,200°C under ordinary pressure.

7. The zirconia molded body according to any one of claims 1 to 6, which has a transmittance of 40% or more for light of 700 nm wavelength at a thickness of 0.5 mm after being sintered at 900 to 1,200°C under ordinary pressure.

8. The zirconia molded body according to any one of claims 1 to 7, which has a linear light transmittance of 1% or more at a thickness of 1.0 mm after being sintered at 900 to 1,200°C under ordinary pressure.

9. The zirconia molded body according to any one of claims 1 to 8, which has ten or fewer pores with a diameter of 50 nm or more per 28.5 µm² cross sectional area after being sintered at 900 to 1,200°C under ordinary pressure.

10. The zirconia molded body according to any one of claims 1 to 9, which has a ΔL*(W-B) of 5 or more at a thickness of 1.5 mm after being pre-sintered at 200 to 800°C.

11. A zirconia pre-sintered body comprising 2.0 to 9.0 mol% of yttria relative to the total number of moles of zirconium oxide and yttria,
the zirconia pre-sintered body having a ΔL*(W-B) of 5 or more at a thickness of 1.5 mm, and having ten or fewer pores with a diameter of 50 nm or more per 28.5 µm² cross sectional area, and a thickness of 10 mm or more after being sintered at 900 to 1,200°C.

12. A method for producing a zirconia pre-sintered body, comprising the step of presintering a zirconia molded body of any one of claims 1 to 10 at 200 to 800°C.

13. A zirconia sintered body comprising 2.0 to 9.0 mol% of yttria relative to the total number of moles of zirconium oxide and yttria,
the zirconia sintered body having ten or fewer pores with a diameter of 50 nm or more per 28.5 µm² cross sectional area, and a thickness of 10 mm or more.

14. A method for producing a zirconia sintered body, comprising the step of sintering a zirconia molded body of any one of claims 1 to 10, or a zirconia pre-sintered body of claim 11 at 900 to 1,200°C under ordinary pressure.
